(19) Europäisches Patentamt

European Patent Office

Office européen des brevets

(11) **EP 1 148 488 A2**

(12) **EUROPEAN PATENT APPLICATION**

(43) Date of publication:
24.10.2001 Bulletin 2001/43

(51) Int Cl.⁷: **G11B 20/00**, G11B 23/28, G11B 7/00

(21) Application number: 01109771.4

(22) Date of filing: 20.04.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 21.04.2000 JP 2000121636

(71) Applicant: **Pioneer Corporation**
**Tokyo-to (JP)**

(72) Inventors:
• **Yoshida, Kazuyuki, Pioneer Corporation**
**Tokorozawa-shi, Saitama-ken (JP)**

• **Moriyama, Yoshiaki, Pioneer Corporation**
**Tokorozawa-shi, Saitama-ken (JP)**
• **Kuroda, Kazuo, Pioneer Corporation**
**Tokorozawa-shi, Saitama-ken (JP)**
• **Suzuki, Toshio, Pioneer Corporation**
**Tokorozawa-shi, Saitama-ken (JP)**

(74) Representative:
**Reinhard - Skuhra - Weise & Partner**
**Postfach 44 01 51**
**80750 München (DE)**

(54) **Information recording/reproducing apparatus and method, information recording medium and program information recording medium**

(57) There is provided an information recording apparatus (C1, C2, R1, R2) and so on capable of preventing illegally copied recording information (Sd) from being reproduced even if recording information (Sd) is illegally copied from an information recording medium (100) to another information recording medium (SP, 100) without being decoded. The cutting apparatus (C1) comprises a substitute information generator (17) for generating substitute information (Scg) by using identification information (Sid) unique to each DVD in which the recording information (Sd) is to be recorded, a substitute information writer (3) for generating substituted data signal (Sdr) by substituting the substitute information (Scg) for part of the recording information (Sd), and a light modulator (6) for recording the generated substituted data signal (Sdr) in a DVD which corresponds to the identification information (Sid) used for the generation of the substitute information (Scg).

FIG. 1

EP 1 148 488 A2

# Description

## BACKGROUND OF THE INVENTION

The present invention relates to a technical filed covering an information recording apparatus, a method for recording the information, an information reproducing apparatus, a method of reproducing the information, and an information recording medium. More specifically, the present invention relates to a technical field covering an apparatus and method for recording such information as image information in such an information recording medium as an optical disc, an information recording medium containing recorded information recorded by such apparatus as the information recording apparatus, an apparatus and method for reproducing the recorded information from the information recording medium, and a program information recording medium containing a control program for the information recording or information reproducing in a way readable by a computer.

Generally, video information such as a movie and audio information such as a music piece are often protected by copyright. In such a case, unauthorized copying of the information and reproducing of the information copied without authorization are prohibited by law as a principle.

For an owner of the copyright, it is necessary to take a measure that effectively prevents the unauthorized copying and playback of the information.

As a conventional measure for the prevention of unauthorized copying, there sometimes is used a method in which control information for limiting the number of duplication of the video information is superimposed on the video information, and the control information is recorded with the video information in the recording medium. In this method, when the video information is played back and copied, copying is controlled based on the control information to prevent unauthorized copying.

More specific description will be given here about this method in which the control information is used for the prevention of unauthorized copying. For example, information such as video information is recorded in the information recording medium, together with the control information indicating that only one copying is authorized. Then, when the recorded video information and so on is played back and copied into another information recording medium, the control information indicating that only one copying is authorized is changed to another control information indicating that no more copying is authorized. Then, this changed control information is superimposed on the video information and so on to be recorded in another recording medium. With this arrangement, even if there is an attempt to read the video information and so on from another information recording medium and copy it to the other recording medium, since the control information indicating that copying is prohibited is superimposed on the information which is read out, copying the information from another recording medium to the other recording medium is disabled.

However, according to the above described method in which the control information is used for the prevention of unauthorized copying, there is a case where unauthorized copying cannot be prohibited effectively if an illegal copying is made from an information recording medium including the control information to another information recording medium so that the video and other information is copied as recorded, i.e. without decoding the video information and so on. In other words, if the information is copied as in the form of an RF (radio frequency) signal, the control information is also copied as-recorded, namely as it indicates that only one copying is authorized. As a result, it becomes possible to make still another copy from another information recording medium to the other recording medium. Thus, it is not possible to effectively prohibit the unauthorized copying.

## SUMMARY OF THE INVENTION

The present invention is made in view of the case described above, and it is therefore an object of the present invention to provide an apparatus and a method for recording video information and so on into an information recording medium so that it can prevent the video information which is illegally copied from being reproduced on another information recording medium, even if the video information is illegally copied from the information recording medium to another information recording medium as it is without being decoded. Another object of the present invention is to provide an information recording medium in which the video information and so on is recorded by the apparatus. The other object of the present invention is to provide an apparatus and a method for reproducing the video information and so on from the information recording medium, and a program information recording medium containing a control program for information recording or information reproducing which is readable by a computer.

The above object of the present invention can be achieved by an information recording apparatus of the present invention. The information recording apparatus is provided with: a substitute information generating device for generating substitute information by using identification information unique to each of information recording media in which recording information is to be recorded; a substituting device for generating substituted recording information by substituting the generated substitute information for part of the recording information; and a recording device for recording the generated substituted recording information in the information recording medium corresponding to the identification information used for the generation of the substitute information.

According to the present invention, the substituted recording information to be recorded in the information recording medium varies in each of the identification information corresponding to the information recording medium. As a result, the substituted recording information recorded in the information recording medium varies in each of the information recording media. Thus, when the substituted recording information recorded in the information recording medium is compared with the identification information corresponding to the information recording medium in which the substituted recording information is recorded at the time of reproduction of the substituted recording information, the reproduction is permitted only if these two of information are properly related with each other. As a result, it becomes possible to prevent the recording information illegally copied from being reproduced since the identification information is not properly related with the substituted recording information when the recording information is illegally copied.

Therefore, even if the recording information is copied illegally from the information recording medium to another information recording medium as it is recorded on the information recording medium without being decoded, in another information recording medium, since there is no proper correspondence between the identification information and the substituted recording information, it becomes possible to prevent the record information illegally copied from being reproduced.

In one aspect of the information recording apparatus of the present invention, a generating device encrypts the recording information by using predetermined key information to generate encrypted recording information. Then, the substituting device generates the substituted recording information by substituting the generated substitute information for part of the generated encrypted recording information. Further, the recording device records the key information, together with the generated substituted recording information, in the information recording medium corresponding to the identification information used for the generation of the substitute information.

According to this aspect, since the recording information is encrypted, it becomes possible to prevent more effectively the recording information illegally copied from being reproduced.

In another aspect of the information recording apparatus of the present invention, the substitute information generating device generates the substitute information including the key information.

According to this aspect, it becomes more difficult to access the key information at the time of reproducing, and it becomes possible to make more difficult to reproduce the recording information illegally copied.

In another aspect of the information recording apparatus of the present invention, a key information encrypting device encrypts the key information by using the identification information to generate encrypted key information. Then, the recording device records the generated encrypted key information in place of the key information in the information recording medium.

According to this aspect, illegal access to the key information and decoding of the recording information thereby at the time of reproducing can be prevented.

In another aspect of the information recording apparatus of the present invention, an identification information encrypting device encrypts the identification information by performing a predetermined encrypting process to generate encrypted identification information. Then, the key information encrypting device encrypts key information by using the generated encrypted identification information to generate the encrypted key information.

According to this aspect, it becomes possible to make difficult to illegally obtain the key information necessary for decoding the recording information at the time of the reproduction.

In another aspect of the information recording apparatus of the present invention, the substitute information generating device generates the substitute information by using encrypted identification information obtained through a predetermined encrypting process performed to the identification information.

According to this aspect, it becomes possible at the time of the reproduction, to make difficult to illegally obtain the identification information necessary for the comparison with the substituted recording information.

In another aspect of the information recording apparatus of the present invention, the encrypting process is a process to encrypt the identification information by using a predetermined unidirectional encrypting function.

According to this aspect, it becomes possible to make more difficult to obtain the identification information at the time of reproducing.

In another aspect of the information recording apparatus of the present invention, an adding device adds a correction code for error correction to the recording information to generate added recording information. Then, the substituting device substitutes the generated substitute information for part of the added record information to generate the substituted recording information.

According to this aspect, the recording information can be reproduced accurately at the time of reproducing.

In another aspect of the information recording apparatus of the present invention, the recording device records the identification information used for the generation of the- substitute information, together with the generated substituted recording information, in the information recording medium corresponding to the identification information.

According to this aspect, by comparing the identification information recorded together with the substituted recording information and contents of this particular substituted recording information at the time of reproducing, it becomes possible to reproduce the substituted recording information only if it is authorized one.

In another aspect of the information recording apparatus of the present invention, the identification information is recorded in advance on the corresponding information recording medium. Then, the substitute information generating device detects the recorded identification information to use it for the generation of the substitute information.

According to this aspect, by comparing the identification information recorded in advance and contents of the substituted recording information at the time of reproducing, it becomes possible to reproduce the substituted recording information only if it is authorized one.

In another aspect of the information recording apparatus of the present invention, the substituting device varies a mode of the substitution using the substitute information by using the identification information.

According to this aspect, since the mode of substitution is varied by the identification information, it becomes possible to make more difficult to reproduce the recording information illegally copied.

The above object of the present invention can be achieved by an information recording apparatus of the present invention. The information recording apparatus is provided with: a generating device for encrypting recording information to be recorded in an information recording medium by using a predetermined key information to generate encrypted recording information; an encrypted key information generating device for encrypting the key information by using identification information recorded on the information recording medium as being unique to each of the information recording media to generate encrypted key information; and a recording device for recording the generated encrypted recording information and the generated encrypted key information, in the information recording medium corresponding to the identification information used for the generation of the encrypted key information.

According to the information recording apparatus of the present invention, the encrypted key information is recorded in the information recording medium in a mode uniquely different in each of the information recording media. Thus, decryption of the encrypted key information must be made by using the identification information, and decryption of the encrypted recording information must be made by using the decrypted key information. Then the recording information is reproduced. As a result, the recording information cannot be decrypted and reproduced unless the identification information and the encrypted key information are properly related with each other. Therefore, it becomes possible to prevent the recording information illegally copied from being reproduced since the identification information is not properly related with the substituted recording information when the recording information is illegally copied.

Therefore, even if the recording information is copied illegally as it is recorded in the information recording medium without being decoded, in another information recording medium, since there is no proper correspondence between the identification information and the encrypted key information, the key information necessary for the decryption of the encrypted recording information cannot be obtained, and it becomes possible to prevent the recording information illegally copied from being reproduced.

In one aspect of the information recording apparatus of the present invention, a substituting device for substituting the generated encrypted key information for part of the generated encrypted record information to generate substituted recording information, wherein the recording device records the generated substituted recording information in the information recording medium corresponding to the identification information used for the generation of the encrypted key information.

According to this aspect, since part of the encrypted record information is provided by the encrypted key information, it becomes possible to make difficult to obtain the encrypted key information at the time of reproducing.

The above object of the present invention can be achieved by an information recording medium of the present invention. The information recording medium is provided with: an information recording region for recording substituted recording information obtained by substituting substitute information for part of recording information, the substitute information generated by using identification information unique to each of the information recording media in which the recording information is to be recorded; and an identification information recording region in which the identification information corresponding to the information recording medium is recorded.

According to the information recording medium of the present invention, the substituted recording information to be recorded varies in each identification information corresponding to the information recording medium. As a result, the substituted recording information to be recorded varies in each of the information recording media. Thus, when the substituted recording information is compared with the corresponding identification information of the information recording medium in which the substituted recording information is recorded, and reproducing is permitted only if these two of information are properly related with each other. As a result, it becomes possible to prevent the recording information illegally copied from being reproduced since the identification information is not properly related with the substituted recording information when the recording information is illegally copied.

Therefore, even if the recording information is copied illegally as recorded in the information recording medium without being decoded, in another information recording medium, since there is no proper correspondence between the identification information and the substituted recording information, it becomes possible to prevent the recording information illegally copied from being reproduced.

In one aspect of the information recording medium of the present invention, information recorded in the information recording region is the substituted recording information obtained by substituting the generated substitute information for part of the encrypted recording information obtained through the encryption of the recording information by using the predetermined key information.

According to this aspect, since the recording information is encrypted, it becomes possible to further prevent the recording information illegally copied from being reproduced.

The above object of the present invention can be achieved by an information recording medium of the present invention. The information recording medium is provided with: (i) an information recording region for recording encrypted recording information obtained through encryption of recording information to be recorded in the information recording medium by using a predetermined key information and encrypted key information obtained through encryption of the key information by using identification information unique to each of the information recording media; and (ii) an identification information recording region in which the identification information corresponding to the information recording medium is recorded.

According to the information recording medium of the present invention, the encrypted key information is recorded in the information recording medium in a mode uniquely different in each of the information recording media. Thus, decryption of the encrypted key information must be made by using the identification information, and decryption of the encrypted record information must be made by using the decrypted key information. Then, the recording information is reproduced. As a result, the recording information cannot be decrypted and reproduced unless the identification information and the encrypted key information are properly related with each other. Therefore, it becomes possible to prevent the recording information illegally copied from being reproduced since the identification information is not properly related with the substituted recording information when the recording information is illegally copied.

Therefore, even if the recording information is copied illegally as it is recorded in the information recording medium without being decoded, in another information recording medium, since there is no proper correspondence between the identification information and the encrypted key information, the key information necessary for the decryption of the encrypted record information cannot be obtained, and it becomes possible to prevent the recording information illegally copied from being reproduced.

The above object of the present invention can be achieved by an information reproducing apparatus of the present invention. The information reproducing apparatus reproduces information from an information recording medium in which substituted recording information obtained by substituting substitute information generated by using identification information unique to each of the information recording media for part of recording information and the identification information corresponding to the information recording medium are recorded. The information reproducing apparatus is provided with: a detecting device for detecting the substituted recording information from the information recording medium; an identification information detecting device for detecting the identification information from the information recording medium; a substitute information extracting device for extracting the substitute information from the detected substituted recording information; an identification information extracting device for extracting the identification information from the extracted substitute information; a comparing device for comparing the identification information extracted from the substitute information with the identification information detected from the information recording medium; and a reproducing device for reproducing the recording information obtained from the detected substituted recording information only if the identification information extracted from the substitute information matches the identification information detected from the information recording medium.

According to the information reproducing apparatus of the present invention, the substituted recording information recorded in the information recording medium varies in each of the identification information corresponding to the information recording medium. As a result, the substituted recording information varies in each of the information recording media. In addition, the reproduction is performed only if the substituted recording information detected is identical with the identification information detected. Therefore, it becomes possible to prevent the recording information illegally copied from being reproduced since the identification information is not identical with the substituted recording information when the recording information illegally copied) of the record information.

Therefore, even if the recording information is copied illegally as it is recorded in the information recording medium without being decoded, in another information recording medium, since there is no proper correspondence between the identification information and the substituted recording information at a time when the recording information on another information recording medium is reproduced, it becomes possible to prevent the recording information illegally copied from being reproduced.

In one aspect of the information reproducing apparatus of the present invention, the substituted recording information is obtained by substituting the generated substitute information for part of encrypted recording information obtained through encryption of the recording information by using a predetermined key information. Then, the key information and the obtained substituted recording information are recorded in the information recording medium corresponding to the identification information used for the generation of the substitute information. In addition, the information reproducing apparatus further comprises a key information detecting device for detecting the key information from the information recording medium. Then, the reproducing device decrypts the encrypted recording information obtained from the detected substituted recording information by using the detected key information and reproduces the recording information only if the identification information extracted from the substitute information matches the identification information detected from the information recording medium.

According to this aspect, since the record information is recorded as encrypted and the reproducing thereof is performed by using the detected key information, it becomes possible to further prevent the recording information illegally copied from being reproduced.

In another aspect of the information reproducing apparatus of the present invention, the key information is contained in the substitute information and recorded in the information recording medium, and the key information detecting device detects the key information from the extracted substitute information.

According to this aspect, it becomes more difficult to obtain the key information at the time of reproducing. Therefore it becomes possible to make more difficult to decrypt and reproduce the encrypted recording information illegally copied.

In another aspect of the information reproducing apparatus of the present invention, encrypted key information obtained through encryption of the key information by using the identification information is recorded in the information recording medium in place of the key information. Then, the key information detecting device detects the encrypted key information from the information recording medium. In addition, the information reproducing apparatus further comprises key information generating device for generating the key information through decryption of the detected encrypted key information by using the detected identification information. Then, the reproducing device decrypts the encrypted recording information obtained from the detected substituted information by using the generated key information and reproduces the record information only if the identification information extracted from the substitute information matches the identification information detected from the information recording medium.

According to this aspect, it becomes possible to prevent access to the key information necessary for the decryption of the encrypted record information and decoding thereof.

In another aspect of the information reproducing apparatus of the present invention, the encrypted key information is obtained through the encryption of the key information by using encrypted identification information obtained from a predetermined encrypting process performed to the identification information and is recorded in the information recording medium. Then, the key information generating device decrypts the detected encrypted key information by using the encrypted identification information obtained from the encrypting process performed to the detected identification information.

According to this aspect, it becomes possible to make further difficult to illegally obtain the key information necessary for decoding the record information at the time of the reproduction.

In another aspect of the information reproducing apparatus of the present invention, the encrypting process encrypts information by using a predetermined unidirectional encrypting function.

According to this aspect, it becomes possible to make further difficult to illegally obtain the encrypted identification information necessary for decrypting the encrypted key information.

In another aspect of the information reproducing apparatus of the present invention, it becomes possible to make further difficult to illegally obtain the identification information which is to be compared with the identification information detected from the information recording medium.

According to this aspect, it becomes possible to make difficult to illegally obtain the identification information necessary for the comparison with identification information detected from the information recording medium.

In another aspect of the information reproducing apparatus of the present invention, the substitute information is generated by using encrypted identification information obtained through a predetermined encrypting process using a predetermined unidirectional encrypting function performed to the identification information corresponding to the information recording medium in which the substituted recording information is to be recorded. Further, the information reproducing apparatus further comprises: an encrypted identification information extracting device for extracting the encrypted identification information from the extracted substitute information; and an encrypted identification information generating device for generating second encrypted identification information through the encrypting process by using the encrypting function performed to the detected identification information. Then, the reproducing device reproduces the recording information only if the generated second encrypted identification information matches the extracted encrypted identification information.

According to this aspect, since reproducing of the recording information is performed only if the encrypted identification information extracted is identical with the second encrypted identification information, it becomes possible to prevent the illegal copy of the record information from being reproduced.

In another aspect of the information reproducing apparatus of the present invention, the substituted recording information is generated by substituting the generated substitute information for part of added record information generated by adding a correction code for error correction to the recording information and is recorded in the information recording medium. Then, the substitute information extracting device extracts the substitute information from the substituted recording information before the error correction is executed. In addition, the information reproducing apparatus further comprises a correcting device for performing an error correction process to the detected substituted recording information by using the correction code.

According to this aspect, it becomes possible to accurately correct errors and to reproduce the record information.

26 In another aspect of the information reproducing apparatus of the present invention, a mode of the substitution using the identification information in the substituted recording information is varied by using the substitute information. Then, the substitute information extracting device extracts the substitute information from the detected substituted recording information based on the mode of the substitution specified by using the detected identification information.

According to this aspect, since the mode of substitution differs for each of the identification information and the mode of substitution must be identified by using the identification information for enabling the reproduction, it becomes possible to make more difficult to reproduce the recording information illegally copied.

The above object of the present invention can be achieved by an information reproducing apparatus of the present invention. The information reproducing apparatus reproduces information from an information recording medium in which identification information unique to each of the information recording media, encrypted recording information obtained through encryption of recording information to be recorded therein by using a predetermined key information, and encrypted key information obtained through encryption of the key information by using the identification information are recorded. The information reproducing apparatus is provided with: a detecting device for detecting the encrypted recording information and encrypted key information from the information recording medium; an identification information detecting device for detecting the identification information from the information recording medium; a key information generating device for decrypting the detected encrypted key information by using the detected identification information to generate the key information; and a reproducing device for decrypting the detected encrypted recording information by using the generated key information to reproduce the recording information.

According to the information reproducing apparatus of the present invention, the encrypted key information is recorded in the information recording medium in a mode uniquely different to each of the information recording media. Further, the encrypted key information must be decrypted by using the identification information detected, and the encrypted record information must be decrypted by using the key information decrypted. Thus, the key information cannot be obtained unless the identification information is not properly related with the encrypted key information. As a result, the recording information cannot be decrypted and reproduced. Therefore, it becomes possible to prevent the recording information illegally copied from being reproduced since the identification information is not properly related with the substituted recording information.

Therefore, even if the recording information is copied illegally as it is recorded in the information recording medium -without being decoded, in another information recording medium, since there is no proper correspondence between the identification information and the encrypted key information, the key information necessary for the decryption of the encrypted record information cannot be obtained. As a result, it becomes possible to prevent the recording information illegally copied from being reproduced.

In one aspect of the information reproducing apparatus of the present invention, substituted recording information generated by substituting the generated encrypted key information for part of the generated encrypted record information is recorded in the information recording medium. Then, the detecting device detects the substituted recording information from the information recording medium. In addition, the information reproducing apparatus further comprises a key information extracting device for extracting the encrypted key information from the detected substituted recording information.

According to this aspect, it becomes possible to make more difficult to obtain the encrypted key information and prevent the encrypted recording information illegally copied from being decrypted and reproduced.

The above object of the present invention can be achieved by an information recording method of the present invention. The information recording method is provided with: a substitute information generating process of generating substitute information by using identification information unique to each of information recording media in which recording information is to be recorded; a substituting process of generating substituted recording information by substituting the generated substitute information for part of the recording information; and a recording process of recording the generated substituted recording information in the information recording medium corresponding to the identification information used for the generation of the substitute information.

According to the information recording method of the present invention, the substituted recording information to be recorded in the information recording medium varies in each of the identification information corresponding to the information recording medium. As a result, the substituted recording information recorded in the information recording medium varies in each of the information recording media. Thus, when the substituted recording information recorded in the information recording medium is compared with the identification information corresponding to the information recording medium in which the substituted recording information is recorded at the time of reproduction of the substituted recording information, the reproduction is permitted only if these two of information are properly related with each other. As a result, it becomes possible to prevent the recording information illegally copied from being reproduced since the identification information is not properly related with the substituted recording information when the recording information is illegally copied.

Therefore, even if the recording information is copied illegally from the information recording medium to another information recording medium as it is recorded on the information recording medium without being decoded, in another information recording medium, since there is no proper correspondence between the identification information and the substituted recording information, it becomes possible to prevent the record information illegally copied from being reproduced.

In one aspect of the information recording method of the present invention, a generating process encrypts the recording information by using a predetermined key information to generate encrypted recording information. Then, the substituting process generates the substituted recording information by substituting the generated substitute information for part of the generated encrypted recording information. Further, the recording process records the key information, together with the generated substituted recording information, in the information recording medium corresponding to the identification information used for the generation of the substitute information.

According to this aspect, since the recording information is encrypted, it becomes possible to prevent more effectively the recording information illegally copied from being reproduced.

The above object of the present invention can be achieved by an information recording method of the present invention. The information recording method is provided with: a generating process of encrypting recording information to be recorded in an information recording medium by using a predetermined key information to generate encrypted recording information; an encrypted key information generating process of encrypting the key information by using identification information recorded on the information recording medium as being unique to each of the information recording media to generate encrypted key information; and a recording process of recording the generated encrypted recording information and the generated encrypted key information, in the information recording medium corresponding to the identification information used for the generation of the encrypted key information.

According to the information recording method of the present invention, the encrypted key information is recorded in the information-recording medium in a mode uniquely different in each of the information recording media. Thus, decryption of the encrypted key information must be made by using the identification information, and decryption of the encrypted recording information must be made by using the decrypted key information. Then the recording information is reproduced. As a result, the recording information cannot be decrypted and reproduced unless the identification information and the encrypted key information are properly related with each other. Therefore, it becomes possible to prevent the recording information illegally copied from being reproduced since the identification information is not properly related with the substituted recording information when the recording information is illegally copied.

Therefore, even if the recording information is copied illegally as it is recorded in the information recording medium without being decoded, in another information recording medium, since there is no proper correspondence between the identification information and the encrypted key information, the key information necessary for the decryption of the encrypted recording information cannot be obtained, and it becomes possible to prevent the recording information illegally copied from being reproduced.

The above object of the present invention can be achieved by an information reproducing method of the present invention. In the information reproducing method, information is reproduced from an information recording medium in which substituted recording information obtained by substituting substitute information generated by using identification information unique to each of the information recording media for part of recording information and the identification information corresponding to the information recording medium are recorded. The information reproducing method is provided with: a detecting process of detecting the substituted recording information from the information recording medium; an identification information detecting process of detecting the identification information from the information recording medium; a substitute information extracting process of extracting the substitute information from the detected substituted recording information; an identification information extracting process of extracting the identification information from the extracted substitute information; a comparing process of comparing the identification information extracted from the substitute information with the identification information detected from the information recording medium; and a reproducing process of reproducing the recording information obtained from the detected substituted recording information only if the identification information extracted from the substitute information matches the identification information detected from the information recording medium.

According to the information reproducing method of the present invention, the substituted recording information recorded in the information recording medium varies in each of the identification information corresponding to the information recording medium. As a result, the substituted recording information varies in each of the information recording media. In addition, the reproduction is performed only if the substituted recording information detected is identical with the identification information detected. Therefore, it becomes possible to prevent the recording information illegally copied from being reproduced since the identification information is not identical with the substituted recording information when the recording information illegally copied) of the record information.

Therefore, even if the recording information is copied illegally as it is recorded in the information recording medium without being decoded, in another information recording medium, since there is no proper correspondence between the identification information and the substituted recording information at a time when the recording information on another information recording medium is reproduced, it becomes possible to prevent the recording information illegally copied from being reproduced.

In one aspect of the information reproducing method of the present invention, the substituted recording information is obtained by substituting the generated substitute information for part of encrypted recording information obtained through encryption of the recording information by using a predetermined key information. Then, the key information and the obtained substituted recording information are recorded in the information recording medium corresponding to the identification information used for the generation of the substitute information. In addition, the information reproducing method further comprises a key information detecting process of detecting the key information from the information recording medium. Then, the reproducing process decrypts the encrypted recording information obtained from the detected substituted recording information by using the detected key information and reproduces the recording information only if the identification information extracted from the substitute information matches the identification information detected from the information recording medium.

According to this aspect, since the record information is recorded as encrypted and the reproducing thereof is performed by using the detected key information, it becomes possible to further prevent the recording information illegally copied from being reproduced.

The above object of the present invention can be achieved by an information reproducing method of the present invention. In the information reproducing method, information is reproduced from an information recording medium in which identification information unique to each of the information recording media, encrypted recording information obtained through encryption of recording information to be recorded therein by using a predetermined key information, and encrypted key information obtained through encryption of the key information by using the identification information are recorded. The information reproducing method is provided with: a detecting process of detecting the encrypted recording information and encrypted key information from the information recording medium; an identification information detecting process of detecting the identification information from the information recording medium; a key information generating process of decrypting the detected encrypted key information by using the detected identification information to generate the key information; and a reproducing process of decrypting the detected encrypted recording information by using the generated key information to reproduce the recording information.

According to information reproducing method of the present invention, the encrypted key information is recorded in the information recording medium in a mode uniquely different to each of the information recording media. Further, the encrypted key information must be decrypted by using the identification information detected, and the encrypted record information must be decrypted by using the key information decrypted. Thus, the key information cannot be obtained unless the identification information is not properly related with the encrypted key information. As a result, the recording information cannot be decrypted and reproduced. Therefore, it becomes possible to prevent the recording information illegally copied from being reproduced since the identification information is not properly related with the substituted record information.

Therefore, even if the recording information is copied illegally as it is recorded in the information recording medium without being decoded, in another information recording medium, since there is no proper correspondence between the identification information and the encrypted key information, the key information necessary for the decryption of the encrypted record information cannot be obtained. As a result, it becomes possible to prevent the recording information illegally copied from being reproduced.

The above object of the present invention can be achieved by a program information recording medium of the present invention. In the program information recording medium, an information recording control program is readably recorded by a computer included in an information recording apparatus for recording information in an information recording medium, the information recording control program causing the computer to function as information recording control devices. The information recording control devices is provided with: a substitute information generating device for generating substitute information by using identification information unique to each of information recording media in which recording information is to be recorded; a substituting device for generating substituted recording information by substituting the generated substitute information for part of the recording information; and a recording device for recording the generated substituted recording information in the information recording medium corresponding to the identification information used for the generation of the substitute information.

According to program information recording medium of the present invention, when the computer reads the program recorded in the program information recording medium, the recording process of the recording information is performed. Therefore, the substituted recording information to be recorded in the information recording medium varies in each of the identification information corresponding to the information recording medium. As a result, the substituted recording information recorded in the information recording medium varies in each of the information recording media. Thus, when the substituted recording information recorded in the information recording medium is compared with the identification information corresponding to the information recording medium in which the substituted recording information is recorded at the time of reproduction of the substituted recording information, the reproduction is permitted only if these two of information are properly related with each other. As a result, it becomes possible to prevent the recording information illegally copied from being reproduced since the identification information is not properly related with the substituted record information when the recording information is illegally copied.

Therefore, even if the recording information is copied illegally from the information recording medium to another information recording medium as it is recorded on the information recording medium without being decoded, in another information recording medium, since there is no proper correspondence between the identification information and the substituted recording information, it becomes possible to prevent the record information illegally copied from being reproduced.

In one aspect of program information recording medium of the present invention, the information recording control program causes the computer to function as information recording control devices, the information recording control devices is further provided with a generating device for encrypting the recording information by using predetermined key information to generate encrypted recording information. Then, the computer functioned as the substituting device generates the substituted recording information by substituting the generated substitute information for part of the generated encrypted recording information, and the recording device records the key information, together with the generated substituted recording information, in the information recording medium corresponding to the identification information used for the generation of the substitute information.

According to the program information recording medium of the present invention, when the computer reads the program recorded in the program information recording medium, the recording process of the recording information is performed. As a result, since the recording information is encrypted, it becomes possible to prevent more effectively the recording information illegally copied from being reproduced.

The above object of the present invention can be achieved by a program information recording medium of the present invention. In the program information recording medium, an information recording control program is readably recorded by a computer included in an information recording apparatus for recording information in an information recording medium, the information recording control program causing the computer to function as information recording control devices. The information recording control devices is prvided with: a generating device for encrypting recording information to be recorded in an information recording medium by using a predetermined key information to generate encrypted recording information; an encrypted key information generating device for encrypting the key information by using identification information recorded on the information recording medium as being unique to each of the information recording media to generate encrypted key information; and a recording device for recording the generated encrypted recording information and the generated encrypted key information, in the information recording medium corresponding to the identification information used for the generation of the encrypted key information.

According to the program information recording medium of the present invention, when the computer reads the program recorded in the program information recording medium, the recording process of the recording information is performed. As a result, the encrypted key information is recorded in the information recording medium in a mode uniquely different in each of the information recording media. Thus, decryption of the encrypted key information must be made by using the identification information, and decryption of the encrypted recording information must be made by using the decrypted key information. Then the recording information is reproduced. As a result, the recording information cannot be decrypted and reproduced unless the identification information and the encrypted key information are properly related with each other. Therefore, it becomes possible to prevent the recording information illegally copied from being reproduced since the identification information is not properly related with the substituted recording information when the recording information is illegally copied.

Therefore, even if the recording information is copied illegally as it is recorded in the information recording medium without being decoded, in another information recording medium, since there is no proper correspondence between the identification information and the encrypted key information, the key information necessary for the decryption of the encrypted recording information cannot be obtained, and it becomes possible to prevent the recording information illegally copied from being reproduced.

The above object of the present invention can be achieved by a program information recording medium of the present invention. In the program information recording medium, an information reproducing control program is readably recorded by a computer included in an information reproducing apparatus for reproducing information from an information recording medium in which substituted recording information obtained by substituting substitute information generated by using identification information unique to each of the information recording media for part of recording information and the identification information corresponding to the information recording medium are recorded, the information reproducing control program causing the computer to function as information reproducing control devices. The information reproducing control devices is provided with: a detecting device for detecting the substituted recording information from the information recording medium; an identification information detecting device for detecting the identification information from the information recording medium; a substitute information extracting device for extracting the substitute information from the detected substituted recording information; an identification information extracting device for extracting the identification information from the extracted substitute information; a comparing device for comparing the identification information extracted from the substitute information with the identification information detected from the information recording medium; and a reproducing device for reproducing the recording information obtained from the detected substituted recording information only if the identification information extracted from the substitute information matches the identification information detected from the information recording medium.

According to the program information recording medium of the present invention, when the computer reads the program recorded in the program information recording medium, the reproducing process of the recording information is performed. As a result, the substituted recording information recorded in the information recording medium varies in each of the identification information corresponding to the information recording medium. As a result, the substituted recording information varies in each of the information recording media. In addition, the reproduction is performed only if the substituted recording information detected is identical with the identification information detected. Therefore, it becomes possible to prevent the recording information illegally copied from being reproduced since the identification information is not identical with the substituted recording information when the recording information illegally copied) of the record information.

Therefore, even if the recording information is copied illegally as it is recorded in the information recording medium without being decoded, in another information recording medium, since there is no proper correspondence between the identification information and the substituted recording information at a time when the recording information on another information recording medium is reproduced, it becomes possible to prevent the recording information illegally copied from being reproduced.

In one aspect of the program information recording medium of the present invention, the substituted recording information is obtained by substituting the generated substitute information for part of encrypted recording information obtained through encryption of the recording information by using a predetermined key information. Then, the key information and the obtained substituted recording information are recorded in the information recording medium corresponding to the identification information used for the generation of the substitute information. In addition, the information reproducing control program causes the computer to function as information reproducing control devices, the information reproducing control devices are further provided with a key information detecting device for detecting the key information from the information recording medium. Then, the reproducing device decrypts the encrypted recording information obtained from the detected substituted recording information by using the detected key information and reproduces the recording information only if the identification information extracted from the substitute information matches the identification information detected from the information recording medium.

According to this aspect, when the computer reads the program recorded in the program information recording medium, the reproducing process of the recording information is performed. As a result, since the record information is recorded as encrypted and the reproducing thereof is performed by using the detected key information, it becomes possible to further prevent the recording information illegally copied from being reproduced.

The above object of the present invention can be achieved by a program information recording medium of the present invention. In the program information recording medium, an information reproducing control program is readably recorded by a computer included in an information reproducing apparatus for reproducing information from an information recording medium in which substituted recording information obtained by substituting substitute information generated by using identification information unique to each of the information recording media for part of recording information and the identification information corresponding to the information recording medium are recorded, the information reproducing control program causing the computer to function as information reproducing control devices. The information reproducing control devices is provided with: a detecting device for detecting the encrypted recording information and encrypted key information from the information recording medium; an identification information detecting device for detecting the identification information from the information recording medium; a key information generating device for decrypting the detected encrypted key information by using the detected identification information to generate the key information; and a reproducing device for decrypting the detected encrypted recording information by using the generated key information to reproduce the recording information.

According to the program information recording medium of the present invention, when the computer reads the program recorded in the program information recording medium, the reproducing process of the recording information is performed. As a result, the encrypted key information is recorded in the information recording medium in a mode uniquely different to each of the information recording media. Further, the encrypted key information must be decrypted by using the identification information detected, and the encrypted record information must be decrypted by using the key information decrypted. Thus, the key information cannot be obtained unless the identification information is not properly related with the encrypted key information. As a result, the recording information cannot be decrypted and reproduced. Therefore, it becomes possible to prevent the recording information illegally copied from being reproduced since the identification information is not properly related with the substituted recording information.

Therefore, even if the recording information is copied illegally as it is recorded in the information recording medium without being decoded, in another information recording medium, since there is no proper correspondence between the identification information and the encrypted key information, the key information necessary for the decryption of the encrypted record information cannot be obtained. As a result, it becomes possible to prevent the recording information illegally copied from being reproduced.

BRIEF DESCRIPTION OF THE DRAWINGS

Fig. 1 is a block diagram showing an outline constitution of a cutting apparatus as a first embodiment of the present invention;
Fig. 2 is a flowchart showing a cutting operation of the first embodiment;
Fig. 3A is a chart showing a structure of a data sector according to the first embodiment;
Fig. 3B is a chart showing a structure of an ECC block according to the first embodiment;
Fig. 4 is a chart showing the structure of the ECC block after substitute information is inserted according to the first embodiment;
Fig. 5 is a chart showing a physical format of data according to the first embodiment;
Fig. 6 is a block diagram showing an outline constitution of an information recording apparatus according to the first embodiment;
Fig. 7 is a block diagram showing an outline constitution of an information reproducing apparatus according to the first embodiment;
Fig. 8 is a flowchart showing a reproducing operation according to the first embodiment;
Fig. 9 is a block diagram showing an outline constitution of a cutting apparatus according to a second embodiment of the present invention;
Fig. 10A is a block diagram showing a detailed constitution of a first example of a substitute information generator according to the second embodiment;
Fig. 10B is a block diagram showing the detailed constitution of a second example of the substitute information generator according to the second embodiment;
Fig. 10C is a block diagram showing the detailed constitution of a third example of the substitute information generator according to the second embodiment;
Fig. 10D is a block diagram showing the detailed constitution of a fourth example of the substitute information generator according to the second embodiment;
Fig. 10E is a block diagram showing the detailed constitution of a fifth embodiment of the substitute information generator according to the second embodiment;.
Fig. 11 is a block diagram showing an outline constitution of an information recording apparatus according to the second embodiment; and
Fig. 12 is a block diagram showing an information reproducing apparatus according to the second embodiment.

DESCRIPTION OF THE PREFERRED EMBODIMENTS

Next, preferred embodiments of the present invention will be described, with reference to the attached drawings.

It should be noted here that each of the embodiments described hereinafter is an application of the present invention to an illegal copying prevention system includes a cutting apparatus used for manufacturing a stamper disc utilized in a mass production of a DVD.

The DVD is a kind of optical disc capable of storing more than seven times of an amount of information than a conventional CD (compact disc). The cutting apparatus, in other words, is an apparatus used by a manufacturer of read-only DVD's. The illegal copying prevention system also includes an information recording apparatus for recording information in a recordable DVD and an information reproducing apparatus for reproducing the information from the DVD.

(I) First Embodiment of the Illegal Copying Prevention System

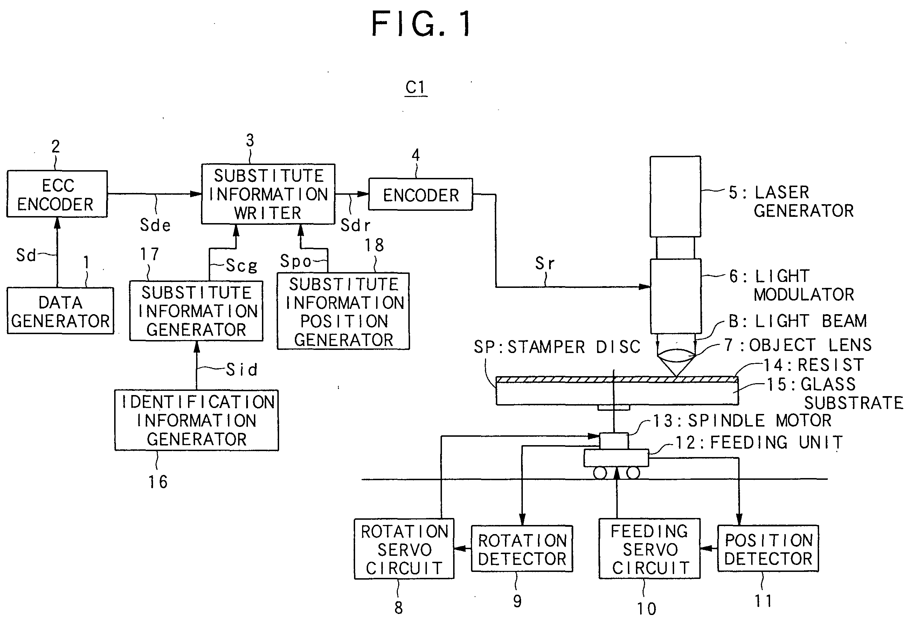

A first embodiment of the illegal copying prevention system according to the present invention will be described with reference to Fig. 1 through Fig. 8.

(A) First Embodiment of the Cutting Apparatus

First, an embodiment of the cutting apparatus according to the first embodiment of the illegal copying prevention system will be described with reference to Fig. 1 through Fig. 5.

The description will first cover a constitution of the cutting apparatus according to the first embodiment with reference to Fig. 1.

As shown in Fig. 1, a cutting apparatus C1 according to the first embodiment comprises: a data generator 1; an ECC (Error Correcting Code) encoder 2; a substitute information writer 3 serving as a substituting device; an encoder 4; a laser generator 5; a light modulator 6 serving as a recording device; an object lens 7; a rotation servo circuit 8; a rotation detector 9; a feeding servo circuit 10; a position detector 11; a feeding unit 12; a spindle motor 13; an identification information generator 16; a substitute information generator 17 serving as a substitute information generating device; and a substitute information position generator 18.

On the other hand, a stamper disc SP includes a resist 14 and a glass substrate 15. The resist 14 is exposed by a light beam B to be described later, and in accordance with change in the intensity of the light beam B, a corresponding pattern of information pits are formed in the resist.

Next, an outline operation will be outlined.

First, the data generator 1 performs the process of generating a data sector with respect to data to be recorded in the DVD, such as image information, audio information or data to be utilized in a computer, and then outputs a data signal Sd to the ECC encoder 2.

Then, the ECC encoder 2 forms ECC blocks to be described later, for the data to be recorded which is included in the data signal Sd, and outputs an added data signal Sde to the substitute information writer 3.

The substitute information writer 3 substitutes part of the ECC blocks contained in the added data signal Sde with substitute information Scg to be described later, and generates a substituted data signal Sdr. The substitute information Scg may or may not be encrypted information as will be described later.

The encoder 4 performs interleaving and 8-16 modulation to the ECC blocks contained in the substituted data signal Sdr, and generates a record data signal Sr.

The identification information generator 16 generates identification information Sid unique to each of the DVDs in which the record data signal Sr is to be recorded and outputs it to the substitute information generator 17. In other words, each of the DVDs which are mass-produced by using the stamper disc SP made by the cutting apparatus C1 is given the identification information Sid unique to itself.

The substitute information generator 17 performs a predetermined process of encrypting to the identification information Sid. Concretely, the process of encrypting includes bit inversion, shuffling between bits, deformation according to a rule determined by an outside element, deformation by using a unidirectional encrypting function as will be described later in the second embodiment. The substitute information generator 17 also generates substitute information Scg unique to each of the DVDs to output it to the substitute information writer 3.

The data length (the number of bits) of the substitute information Scg is set to be within a certain range in which error correction can be performed in error correction processing, which is executed to the ECC blocks at a time when the information is reproduced, if the substitute information Scg is inserted into ECC blocks.

The substitute information position generator 18 generates position information Spo which indicates positions where each of bits of the generated substitute information Scg is inserted in each of the ECC blocks contained in the added data signal Sde, and outputs it to the substitute information writer 3. The substitute information position generator 18 generates the position information Spo based on an insertion table, which is a predetermined insertion table used in common with an information reproducing apparatus S1 to be described later.

With the above arrangement, the substitute information writer 3 inserts bit information from each of the bits of the substitute information Scg to the positions in the ECC blocks indicated by the position information Spo and generates substituted data signal Sdr. In other words, the substitute information writer 3 substitutes information present at each of the insertion positions with the bit information.

The laser generator 5 radiates a light beam B onto the stamper disc SP to form the information pits as necessary for the DVD.

Then, the light modulator 6 performs an intensity modulation of the light beam B radiated from the laser generator 5 by using the record data signal Sr.

The object lens 7 focuses the modulated light beam B on the resist 14 of the stamper disc SP.

At this time, the spindle motor 13 rotates the stamper disc SP.

The rotation detector 9 detects the number of revolutions of the stamper disc SP.

With the above arrangement, the rotation servo circuit 8 performs servo control on the rotation of the stamper disc SP based on the detected number of revolutions.

The feeding unit 12 moves the spindle motor 13 and the stamper disc SP in the direction of the radius of the stamper disc SP in accordance with the rotation of the stamper disc SP, in order to form a spiral track constituted by a single line of the information pits on the stamper disc SP.

the position detector 11 detects the position of the feeding unit 12.

Then, the feeding servo circuit 10 performs servo control on the movement of the feeding unit 12 based on the detected position of the feeding unit 12.

According to the operation described above, the information pits corresponding to the record data signal Sr are formed as the spiral track on the resist 14 of the stamper disc SP, and the stamper disc SP serving as a mold for the manufacture of the DVDs is completed.

Thereafter, by using the completed stamper disc SP, a so-called replication process including resin formation, reflective film formation, protective layer formation and so on is performed, so that the DVDs as replica discs each having the information pits corresponding to the record data signal Sr are mass-produced.

It should be noted here that in the mass-production process of the DVDs, before or after the manufacturing of the stamper disc SP, another piece of the identification information Sid which is identical with the identification information Sid contained in the substitute information Scg is recorded as a barcode for example, in a region of each of the DVDs other than a reserved DVD data region, such as an innermost radius region of the disc.

Thus, each of the DVDs manufactured has the identification information Sid recorded in the reserved data region as the record data signal Sr, and the same identification information Sid in the form of the barcode, for example, recorded in its innermost radius region. Further, each of the DVDs manufactured has this particular identification information Sid as being unique to itself, differing from any other DVD's.

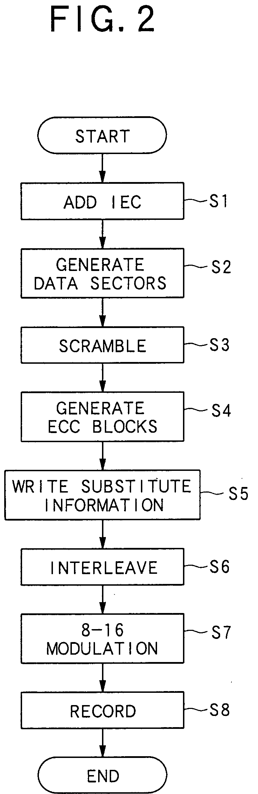

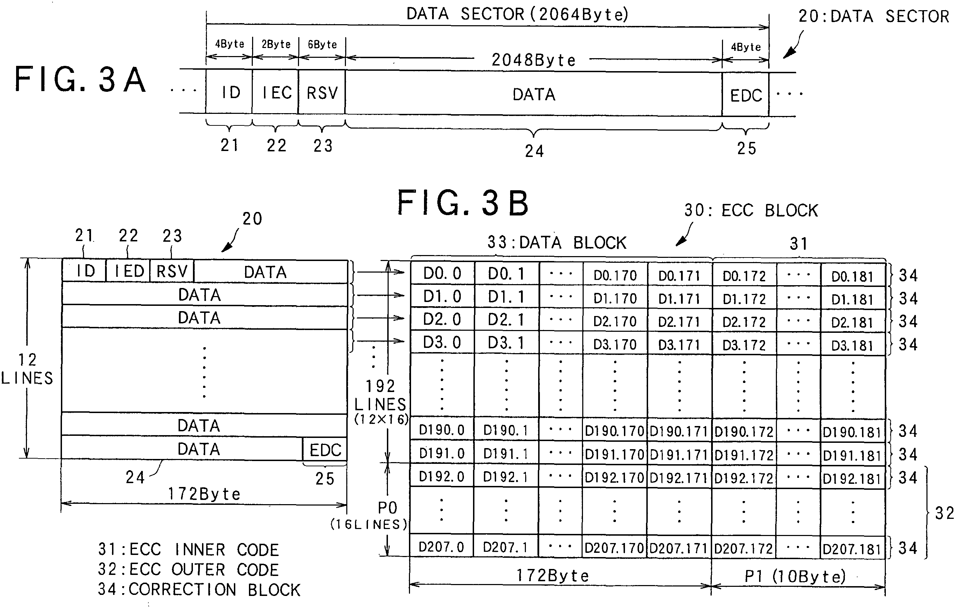

Next, detailed operation in the generation of the record data signal Sr according to the present invention will be described with reference to Fig. 1 through Fig. 5. Fig. 2 is a flowchart showing the operation. Fig. 3 through Fig. 5 are charts showing structures of the generated data (data contained in the record signal Sr) according to the operation.

When the record data signal Sr is generated in the cutting apparatus C1 of the first embodiment, first, a structure of an original data to be recorded is changed into a structure which contains a plurality of information units called data sectors.

Specifically, as shown in Fig. 2, the original data to be recorded is divided into pieces each having 2048 bytes. To each of the pieces, an ID data indicating a starting position of the data sector, and an ID data error correction code (IEC) for correcting an error in the ID data are added (Step S1).

Next, a preparative data and an error detection code (EDC) for detecting an error in the divided piece of the 2048-byte data are added to each of the data generated in Step S1. This completes formation of one data sector (Step S2).

Now, specific constitution of the data sector will be described. As shown in Fig. 3A, the data sector 20 begins with the ID data 21, followed by the ID data correction code 22, the preparative data 23, the data piece 24 created by the division of the original data, and the error detection code 25. This pattern of the data sector 20 is repeated to form a continual string made of a plurality of data sectors, constituting the data to be recorded.

After the data sectors 20 are formed, then scramble modulation is performed to the data 24 by using a predetermined key data (Step S3).

The processes from Step S1 through Step S3 described above is performed in the data generator 1, and the above mentioned data signal Sd including the data 24 that has undergone the scramble modulation is outputted. The key data used for the scrambling is recorded as the data 24, together with the image information and so on.

Next, the ECC encoder 2 generates ECC blocks using the data sectors 20 contained in the data signal Sd. The ECC block is a unit of correction in the error correction processing performed upon reproducing of the data recorded on the DVD. Then, the added data signal Sde including the ECC blocks is outputted to the substitute information writer 3 (Step S4).

The ECC block generating process will be described here in more detail. As shown in Fig. 3B, first, the data sector 20 is divided into pieces each containing 172 bytes. Then, each of the divided pieces of data (hereinafter called data block 33) is arranged sequentially in a vertical direction (See the left chart of Fig. 3B) With this arrangement, twelve lines of the data blocks 33 are placed in the vertical direction.

Then, to each of the data blocks 33 placed in the vertical direction, an ECC inner code 31 (also called PI (Parity In) code, and is an error correction code for correcting data within a single lateral line of the ECC block) is added to the end of the corresponding data block 33, to form a correction block 34 (See the right chart of Fig. 3B). At this point therefore, twelve lines of the correction blocks 34 each having the ECC inner code 31 added are in the arrangement in the vertical direction. Thereafter, this process is repeated for sixteen data sectors 20. As a result, a total of 192 lines of the correction blocks 34 are obtained.

Next, with the 192 lines of the correction blocks 34 arranged in the vertical direction, the 192 lines of the correction blocks 34 are then divided into vertical rows of data, at each byte from the head of the blocks. Then, to each of the vertical data rows obtained, sixteen ECC outer codes 32 (also called PO (Parity Out) codes, and are error correction codes for correcting a data within a single vertical row in the ECC block) are added. The ECC outer codes 32 are added also to the portion of the ECC inner codes 31 of the correction blocks 34.

As a result of the processes described above, there is formed one ECC block 30 including sixteen data sectors 20 as shown in the right chart of Fig. 3B, and thus, the added data Sde including the ECC blocks 30 is outputted to the substitute information writer 3.

At this time, a total amount of information contained in one ECC block 30 is given as below:

(172 + 10) bytes x (192 + 16) lines = 37856 bytes

Of these, the amount of the actual data 24 is given as below:

2048 bytes x 16 = 32768 bytes

It should be noted that in the ECC block 30 as shown in the right chart of Fig. 3B, one byte of data is shown as "Dm.n". For example, "D1.0" is a one-byte data placed in line one, row zero. Likewise, "D190. 170" is a one-byte data placed in line 190, row 170. Thus, the ECC inner codes 31 are placed in row 172 through row 181, whereas the ECC outer codes 32 are placed in row 192 through row 207.

Further, the correction blocks 34 are recorded as a continual string on the DVD (the stamper disc SP).

As shown in the right chart of Fig. 3B, the ECC block 30 is structured to include both of the ECC inner codes 31 and the ECC outer codes 32. Because of this arrangement, correction of the data arranged in the horizontal direction in the right chart of Fig. 3B can be performed by using the ECC inner codes 31, whereas correction of the data arranged in the vertical direction in the right chart of Fig. 3B can be performed by using the ECC outer codes 32.

Specifically, according to the ECC block 30 shown in the right chart of Fig. 3B, error corrections can be doubly performed in the horizontal direction and in the vertical direction. This results in an enhanced error correcting capability over a prior art error correction procedure used in a conventional CD and so on.

More specific description will be given on this point. For example, even if one correction block 34 (which is a line of data constituted by a total of 182 bytes including an ECC inner code for the line, and recorded continually on the DVD as described above) is totally destroyed by a scratch on the DVD for example, the damage represents a loss of only one byte per a row of ECC outer code 32 when the block is viewed in the vertical direction. Therefore, when error correction is performed by using the ECC outer codes 32 in each of the rows, even if all of one correction block 34 has been destroyed, proper error correction can still be achieved, and therefore it is still possible to perform the playback accurately.

Next, the substitute information writer 3 substitutes data, which is contained at the positions indicated by the position information Spo in the ECC block 30 generated as described above, with the substitute information Scg (Step S5).

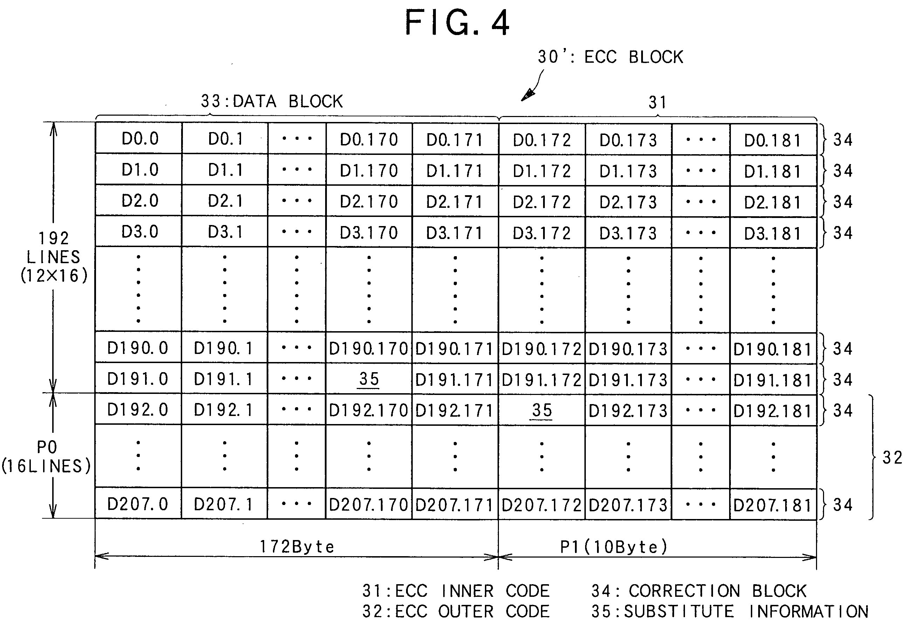

This substitution process will be described here with reference to Fig. 4. Part of one-byte data, which is at each of positions in the ECC block 30 indicated by the insertion table mentioned above corresponding to the position information Spo, is substituted by the substitute information 35 which is a data in each bit of the substitute information Scg. As has been described above, the insertion table is used in common with the information reproducing apparatus S1 to be described later.

After the substitute information 35 is written in Step S5, the substituted data signal Sdr constituted by ECC blocks 30' containing the substitute information 35 is outputted to the encoder 4.

Next, the encoder 4 performs the interleaving and the 8-16 modulation to the ECC blocks 30' contained in the substituted data signal Sdr, and outputs the record data signal Sr (Steps S6 and S7).

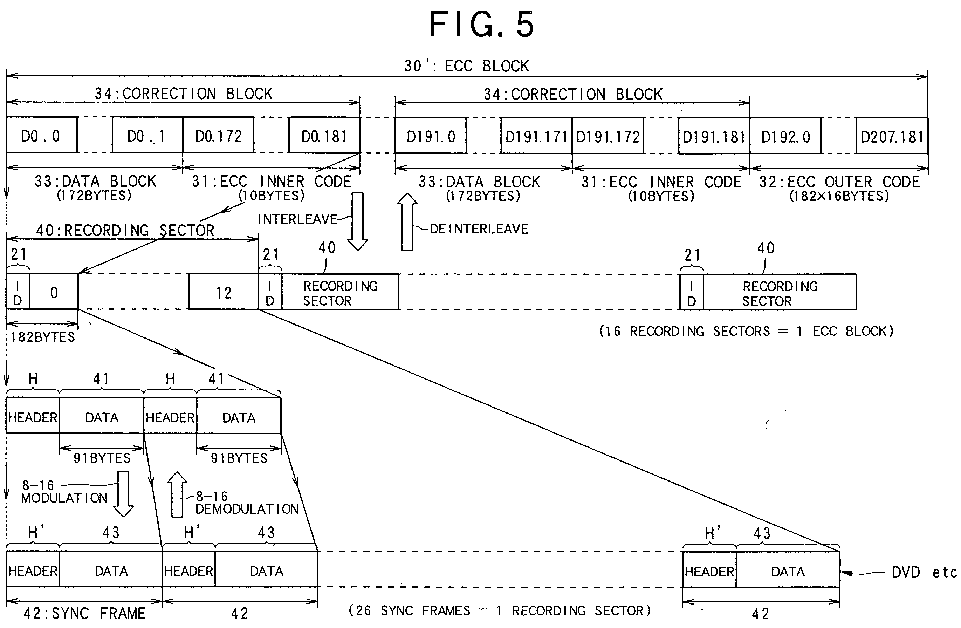

The processes performed in Steps S6 and S7 will be described specifically, with reference to Fig. 5. Data shown in the "Dm.n" format in Fig. 5 corresponds to the data shown in the right chart of Fig. 3B.

First, when the interleaving is performed to the ECC block 30' in Step S6, first, as shown in the uppermost level in Fig. 5, the ECC block 30' is arranged in a single horizontal string of sequentially connected correction blocks 34. Then, the interleaving is performed by rearranging the string of data under a predetermined rule. As a result, the information as in the ECC block 30' is divided into sixteen recording sectors 40. At this time, each one of the recording sectors 40 contains 2366 bytes (37856 bytes divided by 16) of information, which is a mixture of data sector 20 and ECC inner codes or ECC outer codes 31 and the identification information 35. However, the ID data 21 (See Fig. 3A) of the data sector 20 is placed at the head of each recording sector 40.

Each of the recording sectors 40 is divided into data pieces 41 of 91 bytes, and each of the data pieces is given a header H. Thereafter, by performing the 8-16 modulation to the recording sector 40 as under this state, a sync frame 42 is formed for each of the data pieces 41. At this point, each sync frame 42 is constituted by a header H' and a data 43. Amount of information in each sync frame 42 is given as below:

91 bytes x 8 x (16/8) = 1456 bytes

With the above described arrangement, information written in the DVD takes a form of a continual string of the sync frames 42, in which each of the recording sectors 40 contains twenty six sync frames 42.

Since recording of the data into the DVD (stamper disc SP) is performed in the format as described above, the original ECC blocks 30' can be reproduced by performing 8-16 demodulation and deinterleaving (See Fig. 5). The information can be reproduced accurately through the powerful error correction as described above.

(B) First Embodiment of the Information Recording Apparatus

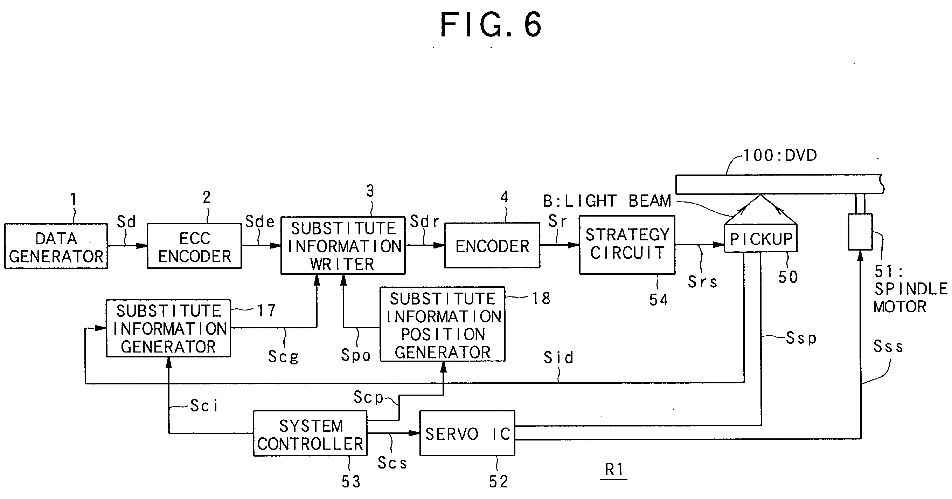

Next, an embodiment of the information recording apparatus according to the first embodiment will be described with reference to Fig. 6.

In Fig. 6, components performing the same function as of those in the cutting apparatus C1 shown in Fig. 1 will be indicated by the same numeral codes, and will not be described in detail.

First, a constitution of the information recording apparatus according to the first embodiment will be described.

As shown in Fig. 6, an information recording apparatus R1 according to the first embodiment comprises, similar to the cutting apparatus C1, a data generator 1, an ECC encoder 2, a substitute information writer 3, an encoder 4, a substitute information generator 17, a substitute information position generator 18, a pickup 50, a spindle motor 51, a servo IC (Integrated Circuit) 52, a system controller 53, and a strategy circuit 54.

A note should be made here that a DVD 100 to which recording is made by the information recording apparatus R1 is a recordable DVD such as DVD-R (DVD-Recordable to which recording can be made only once), DVD-RW (DVD-Re-Recordable to which recording can be made for a plurality of times), and so on. Each of the DVDs 100 has its unique identification information Sid pre-recorded at its innermost radius region for example and in a form of a barcode for example.

Next, operation of each component will be described.

First, the data generator 1, the ECC encoder 2, the substitute information writer 3, the encoder 4, the substitute information generator 17, and the substitute information position generator 18 operate in the same way as those in the cutting apparatus C1 described above, thereby generating the record data signal Sr containing ECC blocks 30' (See Fig. 4) of the format already described above, and outputting it to the strategy circuit 54.

At this time, before commencing the recording, the substitute information generator 17 performs the same operation as in the cutting apparatus C1 by using the identification information Sid detected from the DVD 100, and generates substitute information Scg.

Further, operation of the substitute information generator 17 and of the substitute information position generator 18 are centrally controlled through control signals Sci and Scp from the system controller 53

Next, the strategy circuit 54 performs a so-called strategy process which is a process for forming clear-shaped information pits in the DVD 100 as will be described later, and generates a record signal Srs, which is outputted to the pickup 50.

Then, the pickup 50 controls the intensity of a recording light beam B based on the record signal Srs, and forms the information pits on an information track formed in a data region on the DVD 100, thereby recording the record signal Srs to the DVD 100. Before the recording, however, the pickup 50 detects the identification information Sid from a recording position of the DVD 100 and outputs the detected information to the substitute information generator 17.

The spindle motor 51, whose rotation is controlled based on a spindle control signal Sss from the servo IC 52, rotates the DVD 100 at a predetermined number of revolutions by the spindle motor 51.

An object lens (not shown) in the pick up 50 for focusing the light beam B moves to horizontal and vertical directions based on a pickup control signal Ssp from the servo IC 52, so that a deviation between a focal point of the light beam B and a position of the information track on the DVD 100 in horizontal direction is dissolved.

For this purpose, in addition to the control signals Sci and Scp, the system controller 53 generates a control signal Scs and outputs it to the servo IC 52, so that the servo IC 52 outputs the spindle control signal Sss and the pickup control signal Ssp.

A physical data structure of the record data signal Sr to be recorded in the DVD 100 by the above described information recording apparatus R1 is the same as in the cutting apparatus C1.

In parallel to these processes, the system controller 53 controls operations of each component mentioned above by generating the control signals Sci, Scs and Scp as described above, and at the same time, performs an overall control processing of the information recording apparatus R1. Information necessary for the control processing is entered from outside via an operation panel (not shown).

Further, state of the operation and so on of the information recording apparatus R1 are displayed as needed in a display (not shown) such as a liquid crystal display.

By the above described operation of the information recording apparatus R1, the DVD 100, which has the identification information Sid (the unique identification information Sid differing in each DVD 100) recorded in its innermost radius region, now has the record data signal Sr carrying exactly the same identification information Sid (or the identification information Sid as encrypted or otherwise processed) recorded in the data region of this particular DVD 100.

(C) First Embodiment of the Information Reproducing Apparatus

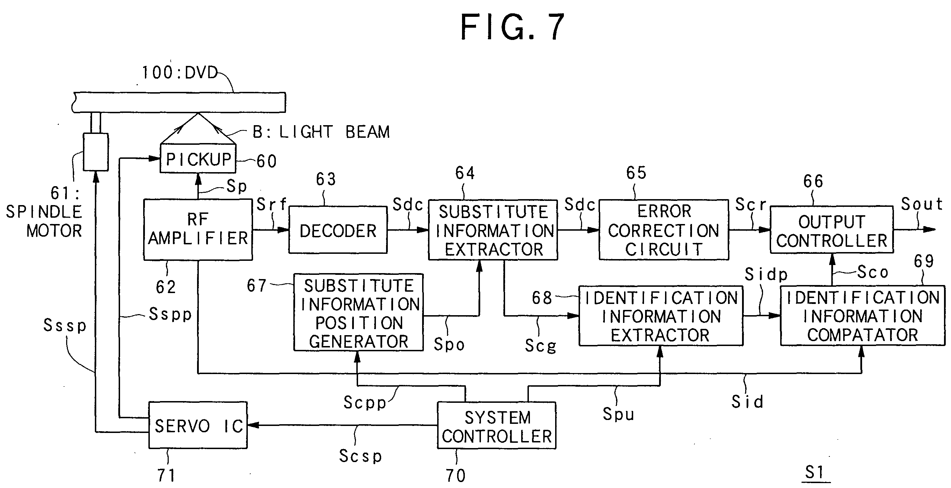

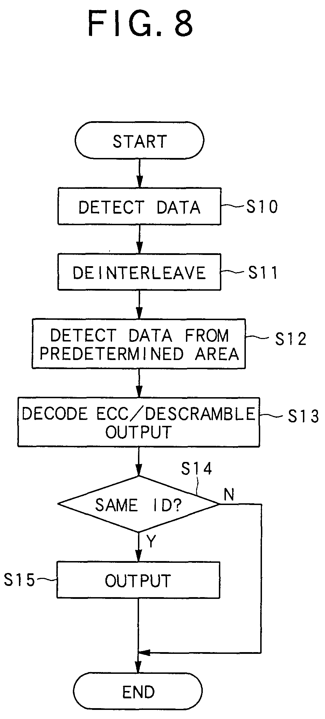

Next, description will cover a first embodiment of the information reproducing apparatus for reproducing the data recorded on a DVD manufactured by using the stamper disc SP whose data is recorded by the cutting apparatus C1, or for reproducing the data recorded on a DVD whose data is recorded by the information recording apparatus R1. Reference will be made to Fig. 7 and Fig. 8.

The information reproducing apparatus described hereinafter is an information reproducing apparatus capable of reproducing image information and audio information if the DVD has a recorded data containing both the image information and the audio information.

First, a constitution of the information reproducing apparatus according to the first embodiment will be described with reference to Fig. 7.

As shown in Fig. 7, an information reproducing apparatus S1 according to the first embodiment comprises a pickup 60 serving as a detecting device, an identification information detecting device and a key information detecting device, a spindle motor 61, an RF (Radio Frequency) amplifier 62, a decoder 63, a substitute information extractor 64 serving as a substitute information extracting device, an error correction circuit 65, an output controller 66 serving as a reproducing device, a substitute information position generator 67, an identification information extractor 68 serving as an identification information extracting device, an identification information comparator 69 serving as a comparing device, a system controller 70 and a servo IC 71.

Next, an operation will be described.

The DVD 100 is a DVD manufactured by using the above described stamper disc SP or a DVD containing information recorded by the information recording apparatus R1. Both are the DVDs having the above described unique identification information Sid respectively recorded therein, and hereinafter will simply be called DVD. The spindle motor 61 whose rotation is controlled based on a spindle control signal Sssp from the servo IC 71 rotates the DVD 100 at a predetermined number of revolutions.

The pickup 60 radiates an information reproducing light beam B onto the rotating DVD 100, and based on reflected light, generates a detection signal Sp corresponding to the information pits formed in the DVD 100, and outputs the generated signal to the RF amplifier 62.

It should be noted that the detection signal Sp includes the identification information Sid which is recorded in the innermost radius region, for example, of the DVD 100 and detected based on the above mentioned reflected light obtained by the radiation of the light beam B onto the innermost radius region of the disc.

An object lens (not shown) in the pick up 60 moves to horizontal and vertical directions based on a pickup control signal Sspp from the servo IC 71, so that a deviation between a focal point of the light beam B and a position of the information track on the DVD 100 in horizontal direction is dissolved.

For this purpose, the system controller 70 generates a control signal Scsp and outputs it to the servo IC 71, so that the servo IC 71 outputs the spindle control signal Sssp and the pickup control signal Sspp.

Next, based on the detected signal Sp inputted, the RF amplifier 62 generates an RF signal Srf corresponding to the data recorded in the DVD 100, and outputs it to the decoder 63. Further, the RF amplifier 62 outputs the detected identification information Sid to the identification information comparator 69 as it is.

Then, the decoder 63 performs the deinterleaving and the 8-16 modulation (See Fig. 5.) to the RF signal, to obtain a reproduction signal Sdc containing the ECC block 30', and outputs the obtained signal to the substitute information extractor 64.

Next, the substitute information extractor 64 extracts, by means of duplication, the inserted substitute information Scg from the positions, indicated by position information Spo to be described later, of the ECC blocks 30' contained in the reproduction signal Sdc, then outputs the extracted information to the identification information extractor 68, and outputs a reproduction signal Sdc after the duplicate-extraction of the substitute information Scg to the error correction circuit 65.

In the above, alternatively, the substitute information extractor 64 may not only duplicate-extract the substitute information Scg from the reproduction signal Sdc, but also substitute zero data after the extraction of the substitute information Scg for all of the information in the positions where the substitute information Scg has been contained, before the output to the error correction circuit 65.

In parallel to this, the substitute information position generator 67 generates, based on a control signal Scpp from the system controller 70 and by utilizing the insertion table shared in common with the substitute information position generator 18, the position information Spo which indicates the positions where the substitute information Scg is inserted in a corresponding Ecc block 30' contained in the reproduction signal Sdc, for each of the ECC blocks 30', and outputs the generated information to the substitute information extractor 64.

Then, based on a control signal Spu from the system controller 70, the identification information extractor 68, performs a decrypting process as a reverse operation of the encrypting process performed in the above described substitute information generator 17, and extracts from the inputted substitute information Scg identification information Sidp (i.e. the identification information Sid inserted in the record data signal Sr) stored as a data in the data region of the DVD 100, and outputs the extracted information to the identification information comparator 69.

The identification information comparator 69 generates a permission signal Sco, which allows outputting of an output signal Sout to be described later from the output controller 66, and outputs it to the output controller 66, only if the identification information Sid outputted from the RF amplifier 62 is identical with the above described identification information Sidp. Namely, only if the identification information Sid inserted in the record data signal Sr is found identical with the identification information Sid recorded in the innermost radius region for example of the DVD 100, the identification information comparator 69 generates the permission signal Sco.

On the other hand, the error correction circuit 65 performs the error correction processing by using the ECC inner codes 31 and the ECC outer codes 32 to the ECC blocks 30' contained in the inputted reproduction signal Sdc (i.e. the ECC blocks 30' after the duplication-extraction of the substitute information Scg), generates an error-corrected signal Scr and outputs the generated signal to the output controller 66.

The output controller 66 outputs the error-corrected signal Scr as the output signal Sout to an external display, speaker and so on, only if the permission information Sco allows outputting of the output signal Sout.

In parallel to these procedures, the system controller 70 generates the control signals Scpp, Spu and Scsp, and controls the operation of the above described components, and at the same time, performs an overall control processing of the information reproducing apparatus S1. Information necessary for the control procedure is entered from outside via an operation panel (not shown).

Further, state of the operation and so on of the information reproducing apparatus S1 are displayed as necessary in the display portion (not shown) of the liquid crystal display for example.

As shown in Fig. 7, the output controller 66 may alternatively be placed before the error correction circuit 65 instead of after the error correction circuit 65, so that outputting of the output signal Sout can be controlled at this stage in accordance with the permission signal Sco.

Next, reproducing operation of the data recorded in the DVD 100 according to the present invention will be described with reference to Fig. 7 and Fig. 8. Fig. 8 is a flowchart showing the reproducing operation.

In the reproducing operation, as shown in Fig. 8, first, the optical pickup 60 radiates the information reproducing light beam B onto the rotating DVD 100, and reproduces the data recorded in the DVD 100 by using the reflected light (Step S10). At this time, the RF amplifier 62 generates the RF signal Srf and outputs it to the decoder 63. At the same time, the RF amplifier 62 also detects the identification information Sid and outputs it to the identification information comparator 69.

Next, the decoder 63 performs deinterleaving and 8-16 demodulation to the RF signal Srf (Step S11), and generates the reproduction signal Sdc.

At this stage of the reproduction signal Sdc, the data detected from the DVD 100 contains a plurality of ECC blocks 30' shown in Fig. 4 as a result of the deinterleaving and the 8-16 demodulation.

Next, the substitute information extractor 64 detects data stored in the region where the substitute information 35 is recorded (See Fig. 4) in the ECC block 30' contained in the reproduction signal Sdc, and outputs it to the identification information extractor 68 as the substitute information Scg (Step S12).

At this time, the position, in the ECC Block 30', of the region containing the substitute information 35 in the ECC blocks 30' is indicated by the position information Spo and is inputted to the substitute information extractor 64. Thus, the substitute information Scg is detected by making reference to a content of the position information Spo.

Further, the substitute information extracting circuit 64 outputs the information, after the duplicate-extraction of the substitute information Scg from the inputted reproduction signal Sdc, to the error correction circuit 65.

Then, the error correction circuit 65 corrects errors contained in the reproduction signal Sdc by using the ECC inner codes 31 and the ECC outer codes 32 stored in the ECC blocks 30', generates the above described error-corrected signal Scr and outputs it to the output controller 66.

It should be noted here that the error-corrected signal Scr undergoes a de-scrambling operation before being inputted to the output controller 66 (Step S13).

Next, the identification information comparator 69 compares the identification information Sid with the identification information Sidp (Step S14), and only if both are found identical with each other (Step S14; yes), generates the permission signal Sco which permits the outputting of the output signal Sout to be described later from the output controller 66 and outputs the output signal Sout to the outside (Step S15).

The substitute information 35 in the ECC blocks 30' is recognized and therefore corrected as an error in the error correction performed in the error correction circuit 65, and therefore is not contained in the output signal Sout which is reproduced and outputted.

On the other hand, if Step S14 determines that the two pieces of identification information Sidp and Sid are not identical with each other (Step S14; no), then the processing goes to an end without executing the outputting process, with a conclusion that the data recorded in the DVD 100 is not an authorized record and therefore is an illegal copy.

It should be noted that if the substitute information Scg contains the identification information Sid which is encrypted by using a unidirectional encrypting function, the reproduction process in the information reproducing apparatus S1 will be as follows. Specifically, the identification information Sid detected from the DVD 100 is encrypted by using the encrypting function, and the extracted identification information Scg is further processed to extract the encrypted identification information Sidp, and these two pieces of information are compared. If both are found identical, then Step S15 and other reproducing procedures are executed.

As has been described above, according to the operation of the illegal copying prevention system provided by the first embodiment, each DVD 100 has its unique identification information Sid, which is used for the generation of the substitute information Scg. Further, the substitute information Scg is substituted for part of the added data signal Sde, thereby the record data signal Sr is produced to be recorded in the above particular DVD 100 that has the identification information Sid used specifically for the generation of the above particular substitute information Scg. Therefore, the record data signal Sr recorded in the DVD 100 differs for each identification information Sid contained in the DVD 100. As a result, the record data signal Sr recorded differs for each DVD 100.

In addition, during reproduction of the record data signal Sr, one identification information Sid in the record data signal Sr and another identification information Sid contained in the DVD 100 in which the one identification information Sid is recorded are compared with each other, so that the reproducing is permitted only if both agree with each other. Therefore, it becomes possible to prevent an illegal copy of the record data signal Sr from being reproduced. Namely, if the duplication of the record data signal Sr is made in such a way that the identification information Sid specifically given to the DVD 100 does not agree with the identification information Sid stored in the record data signal Sr, the record data signal Sr is not reproduced.

Further, since the positions in the ECC block 30 at which the substitute information Scg is inserted are changed in each ECC block 30, it becomes possible to make more difficult to reproduce the illegal copy of the record data signal Sr.

It should be noted here that according to the first embodiment described above, the generation of the substitute information Scg at the time of writing the substitute information Scg is made by performing a predetermined encrypting process to the identification information Sid. Alternatively however, the identification information Sid per se may be written in the ECC block, as the substitute information Scg, without performing any encrypting process.

According to the above arrangement, the decrypting process can be eliminated when the information is reproduced, and the identification information Sid can be obtained easily.

(II) Second Embodiment of the Illegal Copying Prevention System

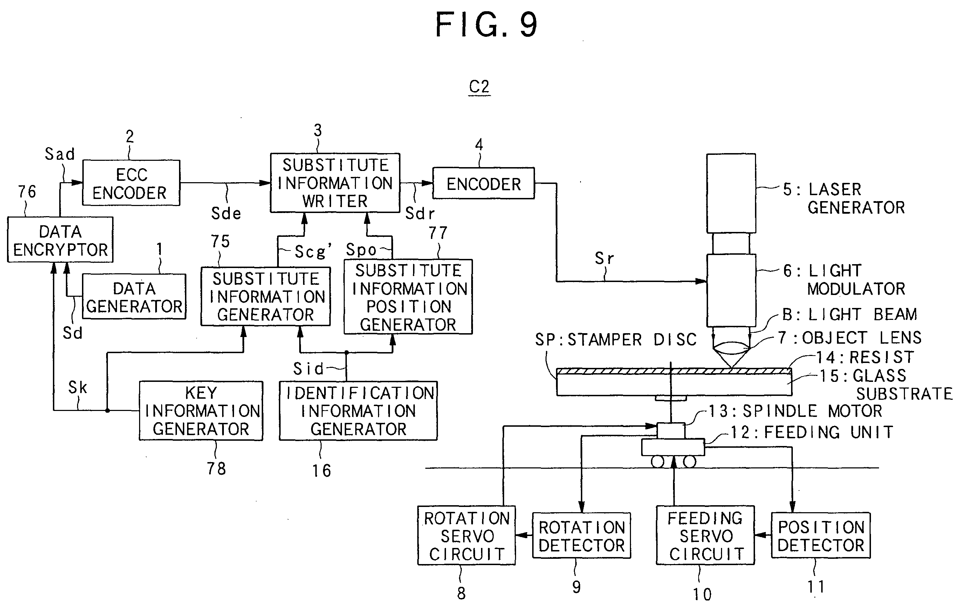

First, a second embodiment of the illegal copying prevention system according to the present invention will be described with reference to Fig. 9 through Fig. 12.

According to the first embodiment described above, the record data signal Sr to be recorded in the DVD 100 is generated by substituting the substitute information Scg containing the identification information Sid unique to each DVD for part of the ECC blocks 30. Further, when the record data signal Sr is reproduced, distinction between a legal copy and an illegal copy is made by comparing the identification information Sid stored in the record data Sr with the identification information Sid separately detected from the DVD 100 itself as a unique code of this particular DVD 100. According to the second embodiment to be described hereinafter, the substitute information Scg itself, which contains the identification information Sid, is further encrypted to a higher level, and at the same time, the data signal Sd itself, which is the original data to be recorded in the DVD 100, is also further encrypted to a higher level by using key information.

(A) Second Embodiment of the Cutting Apparatus

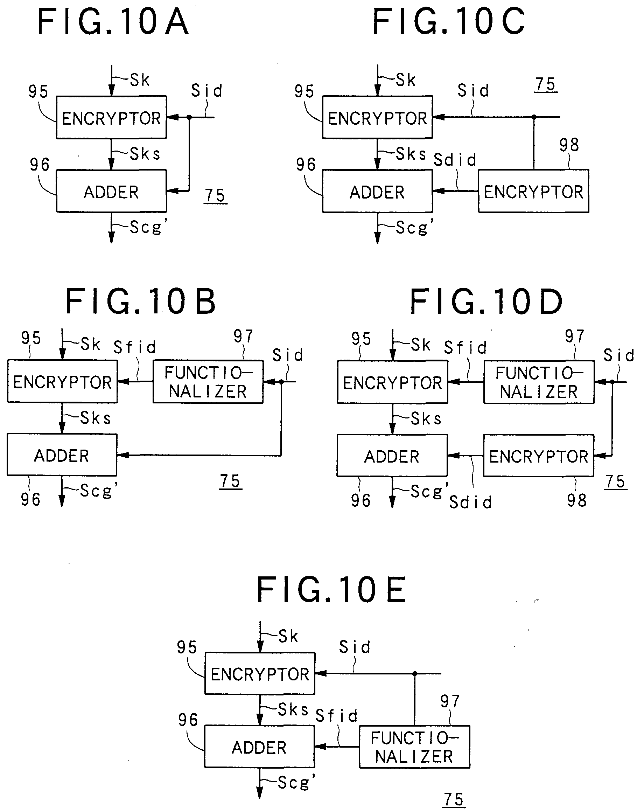

First, a cutting apparatus according to the second embodiment will be described with reference to Fig. 9 and Fig. 10.

In Fig. 9, components performing the same function as of those in the cutting apparatus C1 according to the first embodiment will be indicated by the same numeral codes, and will not be described in detail.

As shown in Fig. 9, the cutting apparatus C2 according to the second embodiment comprises, similar to the cutting apparatus C1 according to the first embodiment, a data generator 1, an ECC encoder 2, a substitute information writer 3, an encoder 4, a laser generator 5, a light modulator 6, an object lens 7, a rotation servo circuit 8, a rotation detector 9, a feeding servo circuit 10, a position detector 11, a feeding unit 12, a spindle motor 13, and an identification information generator 16, and further comprises a substitute information generator 75 serving as a key information encrypting device and an identification information encrypting device, a data encryptor 76 serving as a generating device, substitute information position generator 77, and a key information generator 78.

Next, an operation will be outlined.

First, the key information generator 78 generates key information Sk and outputs it to the data encryptor 76 and the substitute information generator 75. The key information Sk is used for encryption of a data signal Sd by means of a predetermined encrypting method as will be described later.

The identification information generator 16 generates identification information Sid in the same way as in the first embodiment and outputs the generated information to the substitute information generator 75 and the substitute information position generator 77.

The data generator 1 generates the data signal Sd in the same way as in the first embodiment, and then outputs the generated signal to the data encryptor 76.

Using these pieces of information, the data encryptor 76 encrypts the data contained in the data signal Sd by applying the predetermined encrypting method which uses the key information Sk, and generates encrypted data signal Sad to output it to the ECC encoder 2.

The ECC encoder 2 performs ECC block formation to the encrypted data signal Sad in the same way as in the first embodiment, and outputs added data signal Sde to the substitute information writer 3.

Next, the substitute information writer 3 substitutes substitute information Scg' for part of the ECC blocks contained in the added data signal Sde, and generates substituted data signal Sdr in the same way as in the first embodiment.

Then, the encoder 4 generates record data signal Sr in the same way as in the first embodiment.

The identification information generator 75, uses any one of the methods shown in Fig. 10, and superimposes the key information Sk from the key information generator 78 on the identification information Sid from the identification information generator 16. The identification information Sid is unique to each of the DVDs which are mass-produced by using the stamper disc SP prepared by the cutting apparatus C2. Then, the identification information generator 75 generates the substitute information Scg' unique to the second embodiment and outputs it to the substitute information writer 3.

In parallel to this, the substitute information position generator 77 generates position information Spo which indicates positions where each of the generated bits of the substitute information Scg' is to be inserted in each of the ECC blocks contained in the added data signal Sde, and outputs the generated information to the substitute information writer 3.

More specifically, the substitute information generator 77 generates the position information Spo based on any one of the insertion tables which are shared in common with an information reproducing apparatus S2 to be described later and are used in the same way as in the first embodiment. The insertion table actually used for the generation of the position information Spo is selected in accordance with a rule determined by the identification information Sid inputted by the identification information generator 16. Thus, content of the position information Spo becomes different for each of the identification information Sid.

With the above arrangement, the substitute information writer 3 inserts bit information from each of the bits of the substitute information Scg' to the positions in the ECC blocks indicated by the position information Spo, and generates the substituted data signal Sdr mentioned above.

Thereafter, the laser generator 5, light modulator 6, the object lens 7, the rotation servo circuit 8, the rotation detector 9, the feeding servo circuit 10, the position detector 11, the feeding unit 12, and the spindle motor 13 are operated in the same way as in the first embodiment, to form the information pits corresponding to the record data signal Sr as the spiral track on the resist 14 of the stamper disc SP, and the stamper disc SP serving as a mold for the manufacture of the DVD's is completed.

Thereafter, by using the completed stamper disc SP, a so-called replication process including resin formation, reflective film formation, protective layer formation and so on is performed, in a mass production process of the DVDs as replica discs each having the information pits corresponding to the record data signal Sr.

It should be noted here that in the mass-production process of the DVDs, in the same way as in the first embodiment, another piece of the identification information Sid which is identical with the identification information Sid contained in the substitute information Scg' is recorded as a barcode for example, in a region of each of the DVDs other than a reserved DVD data region, such as an innermost radius region of the disc.

Thus, each of the DVDs manufactured has the identification information Sid recorded in the above mentioned data region as part of the record data signal Sr, and the same identification information Sid in the form of the barcode for example, recorded in its innermost radius region for example. Further, each of the DVDs manufactured has this particular identification information Sid as being unique to itself, differing from any other DVD's.

Next, variations in the generating process of the substitute information Scg' performed in the substitute information generator 75 will be described with reference to Fig. 10.

First, as a first variation, the substitute information generator 75 comprises an encryptor 95 and an adder 96 as shown in Fig. 10.

According to this constitution, the encryptor 95 encrypts the key information Sk into encrypted key information Sks by means of a predetermined encrypting method using the identification information Sid. Then, the generated encrypted key information Sks and the identification information Sid are added to each other by the adder 96 to be the substitute information Scg'.

With the above constitution, as a specific mode of the addition, the encrypted key information Sks may be provided by the highest three bits and the identification information Sid may be provided by the lowest three bits of the substitute information Scg', so that the substitute information Scg' is formed as a six-bit information for example.

As a second variation, as shown in Fig. 10B, the substitute information generator 75 comprises an encryptor 95, an adder 96 and a functionalizer 97.

In this variation, first, the functionalizer 97 processes the identification information Sid by using a predetermined unidirectional encrypting function, thereby generating functionalized identification information Sfid, and outputs the generated information to the encryptor 95.

The term unidirectional encrypting function is such a function by which calculation of the functionalized identification information Sfid from the identification information Sid is possible but calculation of the original identification information Sid from the functionalized identification information Sfid is difficult, practically impossible or totally impossible. Specific examples are a function which repeats a compressing process and an irreversible function.

With the above described process, the encryptor 95 encrypts the key information Sk using the functionalized identification information Sfid and the above described encrypting method, and generates encrypted key information Skss. Then, the adder 96 adds the encrypted key information Skss to the identification information Sid in the same way as in the case shown in Fig. 10A, to generate the substitute information Scg'.

Further, as a third variation, as shown in Fig. 10C, the substitute information generator 75 comprises encryptors 95 and 98, and an adder 96.

With this arrangement, first, the encryptor 98 encrypts the identification information Sid by means of the encrypting method described above, thereby generating encrypted identification information Sdid, and outputs the generated information to the adder 96.

In parallel to this, the encryptor 95 encrypts the key information Sk by using the identification information Sid and by means of the above encrypting method, thereby generating encrypted key information Sks. Then, the adder 96 adds the encrypted key information Sks to the identification information Sdid in the same way as in the case shown in Fig. 10A, to generate the substitute information Scg'.

Further, as a fourth variation, as shown in Fig. 10D, the substitute information generator 75 comprises encryptors 95 and 98, a functionalizer 97 and an adder 96.

With this constitution, first, the functionalizer 97 processes the identification information Sid by using the encrypting function described above, thereby generating functionalized identification information Sfid, and outputs the generated information to the encryptor 95.

In parallel to this, the encryptor 98 encrypts the identification information Sid by means of the above encrypting method, thereby generating encrypted identification information Sdid, and outputs the generated information to the adder 96. At this time, for example, the encryptor 98 can be constituted by using a unidirectional encrypting function. This encrypting function may be the same encrypting function as used in the functionalizer 97 or may be another encrypting function having a different unidirectional.

Then, the encryptor 95 encrypts the key information Sk by using the functionalized identification information Sfid and by means of the above encrypting method, thereby generating functionalized key information Skss. Then, the adder 96 adds the encrypted key information Skss to the encrypted identification information Sdid in the same way as in the case shown in Fig. 10A, to generate the substitute information Scg'.

Lastly, as a fifth variation, as shown in Fig. 10E, the substitute information generator 75 comprises an encryptor 95, a functionalizer 97 and an adder 96.

With this constitution, first, the functionalizer 97 processes the identification information Sid by using the encrypting function described above, thereby generating functionalized identification information Sfid, and outputs the generated information to the adder 96.

Then, the encryptor 95 encrypts the key information Sk by using the identification information Sid and by means of the above encrypting method, thereby generating encrypted identification information Sks. Then, the adder 96 adds the functionalized key information Sks to the functionalized identification information Sfid in the same way as in the case shown in Fig.10A, to generate the substitute information Scg'.

A note should be made here that in each of the cases shown in Fig. 10, the key information Sk is encrypted by the encryptor 95 and then included in the substitute information Scg'. Alternatively, the key information Sk may be included as it is, without the encryption, in the substitute information Scg'.

Further, according to two cases, i.e. the cases in Fig. 10B and Fig. 10D out of the cases shown in Fig. 10, the identification information Sid is encrypted by means of a unidirectional encrypting function, and this encrypted information is used in the encryption of the key information Sk. Alternatively however, the identification information Sid may be encrypted by another encrypting process which is different from the encrypting process that uses the unidirectional encrypting function, and the encrypted identification information prepared by another encrypting process may be used in the encryption of the key information Sk.

Further, according to the cutting apparatus C2 described above, the key information Sk (or the encrypted key information Sks and so on) is included in the substitute information Scg'. Alternatively however, the inclusion may be made in a predetermined position of innermost radius region of the DVD 100, instead of in the substitute information Scg'.

(B) Second Embodiment of the Information Recording Apparatus

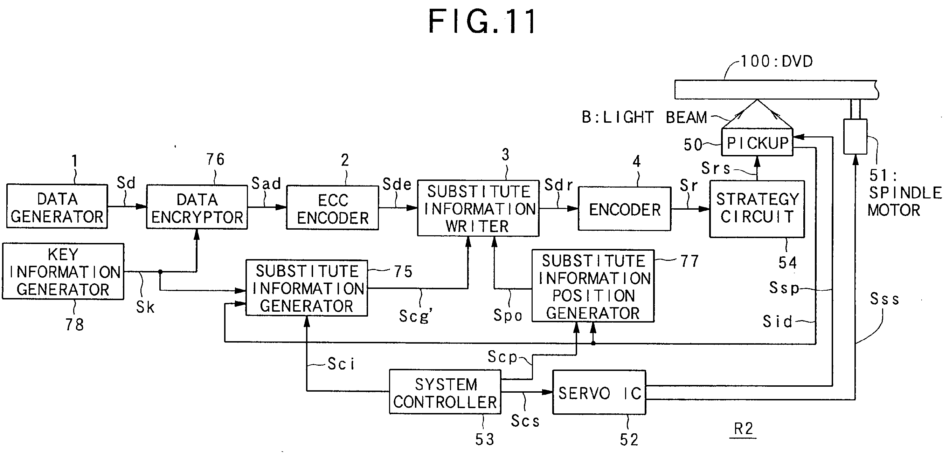

Next, an information recording apparatus according to the second embodiment will be described with reference to Fig. 11.

In Fig. 11, components performing the same operation as of those in the cutting apparatus C2 shown in Fig. 9 will be indicated by the same numeral codes, and will not be described in detail.

First, a constitution of the information recording apparatus according to the second embodiment will be described.

As shown in Fig. 11, an information recording apparatus R2 according to the second embodiment comprises components similar to those in the cutting apparatus C2 such as a data generator 1, an ECC encoder 2, a substitute information writer 3, an encoder 4, a key information generator 78, a substitute information generator 75, a substitute information position generator 77, and further comprises components similar to those in the information recording apparatus R1, such as a pickup 50, a spindle motor 51, a servo IC 52, a system controller 53, and a strategy circuit 54.

Likewise, a DVD 100 to which recording is made by the information recording apparatus R2 is a recordable DVD such as DVD-R, DVD-RW, and so on, and each of the DVDs 100 has its unique identification information Sid pre-recorded at its innermost radius region for example and in the form of a barcode for example.

Next, operation of each component will be described.

First, the data generator 1, the ECC encoder 2, the substitute information writer 3, the encoder 4, the substitute information generator 75, and the substitute information position generator 77 operate in the same way as those in the cutting apparatus C2 described earlier, thereby generating the record data signal Sr containing ECC blocks 30' (See Fig. 4) of the format already described above, and outputting it to the strategy circuit 54.

At this time, before recording data, the substitute information generator 75 generates the above described substitute information Scg' by using any one of the variations shown in Fig. 10 and by using the above described identification information Sid and the key information Sk detected from the DVD 100 via the pick up 50.

Further, operation of the substitute information generator 75 and of the substitute information position generator 77 are centrally controlled through control signals Sci and Scp from- the system controller 53, in the same way as in the first embodiment.

Thereafter, the strategy circuit 54, the pickup 50, the spindle motor 51 and the servo IC 52 as well as the system controller 53 operate in the same way as in the first embodiment in performing servo control of the relevant component, thereby recording a record signal Srs on the rotating DVD 100.

By the above described operation of the information recording apparatus R2, the same identification information Sid as the identification information Sid (the unique identification information Sid differing in each DVD 100) recorded in its innermost radius region, and the key information Sk (or the encrypted identification information Sfid or Sdid and the encrypted key information Sks or Skss) are inserted to the record data signal Sr. Then, the record data signal Sr is encrypted to be recorded in the data region of the DVD 100.

(C) Second Embodiment of the Information Replaying Apparatus

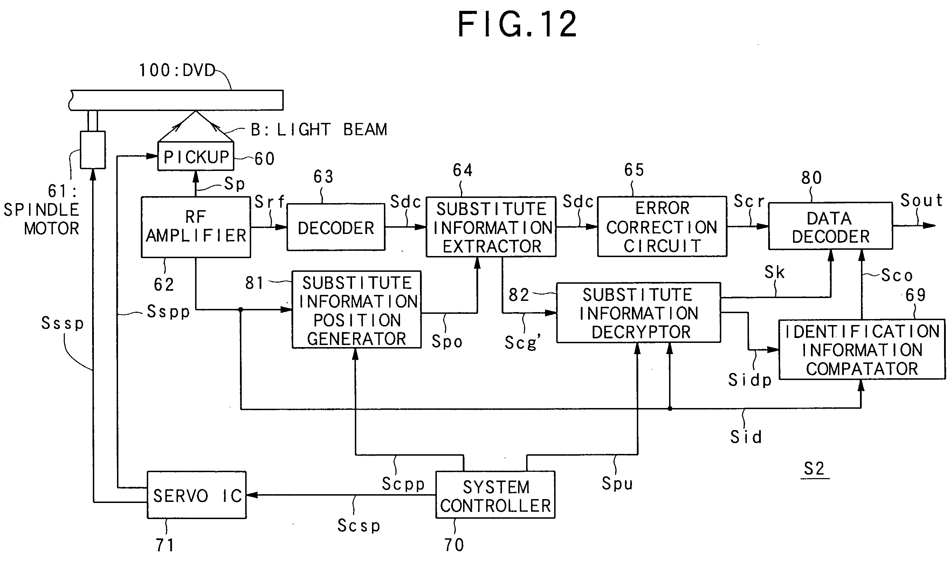

Next, a second embodiment of the information reproducing apparatus will be described with reference to Fig. 12. The information reproducing apparatus is an apparatus for reproducing the data recorded on the DVD manufactured by using the stamper disc SP whose data is recorded by the cutting apparatus C2, or for reproducing the data recorded on the DVD whose data is recorded by the information recording apparatus R2.

It should be noted that in the information reproducing apparatus according to the second embodiment shown in Fig. 12, components performing the same function as of those in the information reproducing apparatus R1 according to the first embodiment will be indicated by the same numeral codes, and will not be described in detail.

First, a constitution of the information reproducing apparatus according to the second embodiment will be described with reference to Fig. 12.

As shown in Fig. 12, an information reproducing apparatus S2 according to the second embodiment comprises components similar to those in the first embodiment, such as a pickup 60, a spindle motor 61, an RF amplifier 62, a decoder 63, a substitute information extractor 64, an error correction circuit 65 serving as an error correcting device, an identification information comparator 69, a system controller 70, a servo IC 71, a data decoder 80 serving as a reproducing device, a substitute information position generator 81, and a substitute information decoder 82 serving as a key information extracting device, a key information generating device, an identification information generating device, and an encrypted identification information generating device.

Next, an operation will be described.

First, the operation is performed in the same way as in the first embodiment. Thus, a light beam B for information reproducing is radiated onto the rotating DVD 100 under relevant servo controls, and detection signal Sp corresponding to the information pits formed in the DVD 100 is generated based on the reflected light and outputted to the RF amplifier 52.

It should be noted that the detection signal Sp includes the identification information Sid detected based on the reflected light.

Next, in the same way as in the first embodiment, the RF amplifier 62 generates an RF signal Srf and outputs it to the decoder 63, and further, outputs the detected identification information Sid as it is to each of the identification information comparator 69, substitute information position generator 81 and the substitute information decryptor 82.

Then, the decoder 63 performs deinterleaving and 8-16 modulation to the RF signal Srf to generate a reproduction signal Sdc containing ECC blocks 30', and outputs the generated signal to the substitute information extractor 64.

Next, the substitute information extractor 64 extracts, by means of duplication, the inserted substitute information Scg' from positions, indicated by position information Spo to be described later, of the ECC blocks 30' contained in the reproduction signal Sdc, then outputs the extracted information to the substitute information decoder 82, and outputs the reproduction signal Sdc after the duplicate-extraction of the substitute information Scg' to the error correction circuit 65.

At this time, the substitute information position generator 81 performs a similar operation to the operation performed by the substitute information position generator 77 in the above described cutting apparatus C2 or the information recording apparatus R2. The operation is based on a control signal Scpp from the system controller 70 and the identification information Sid, and is performed by utilizing one of the insertion tables shared in common with the substitute information position generator 77. Selection of the insertion table is made in accordance with the rule determined by the identification information Sid. Then, the substitute information position generator 81 generates the position information Spo that differs for each of the identification information Sid for each of the ECC blocks 30', and outputs it to the substitute information extractor 64.

With the above arrangement, the substitute information decryptor 82 performs a decrypting process to the substitute information Scg' by using the identification information Sid. The decrypting process is a reverse process to the process performed in the above described substitute information generator 75. Then, the substitute information decryptor 82 generates key information Sk and identification information Sidp similar to that in the first embodiment from the substitute information Scg', and outputs the key information Sk to the data decoder 80. Further, the substitute information decryptor 82 outputs the identification information Sidp to the identification information comparator 69.

The decrypting procedure in the substitute information decryptor 82 depends on which of the variations in those shown in Fig. 10 is utilized as the substitute information generator 75.

Specifically, if the substitute information generator 75 is constituted according to the first variation shown in Fig. 10A, then, the substitute information decryptor 82 first separates the substitute information Scg' into the higher three bits and the lower three bits, thereby generating identification information Sidp and encrypted key information Sks.

Then, the substitute information decryptor 82 outputs the identification information Sidp to the identification information comparator 69 as it is. On the other hand, the substitute information decryptor 82 processes the encrypted key information Sks by using a decrypting method which corresponds to the encrypting method performed in the encryptor 95 by using identification information Sid recorded in the innermost radius region of the DVD 100. Then, the substitute information decryptor 82 generates the key information Sk to output it to the data decoder 80.

Alternatively, when the encrypted key information Sks is decrypted, the decryption may be performed by using the identification information Sidp.

On the other hand, if the substitute information generator 75 is constituted according to the second variation shown in Fig. 10B, then the substitute information decryptor 82 is provided with the functionalizer 97 described above.

Specifically, first, the substitute information decryptor 82 generates identification information Sidp and encrypted key information Skss respectively by separating the substitute information Scg' into the higher three bits and the lower three bits.

Thereafter, the substitute information decryptor 82 outputs the identification information Sidp to the identification information comparator 69. The substitute information decryptor 82 processes the identification information Sid recorded in the innermost radius region of the DVD 100 by the functionalizer 97 and generates functionalized identification information Sfid.

Then, the substitute information decryptor 82 processes the encrypted key information Skss, which is separated, by using a decrypting method which corresponds to the encrypting method performed in the encryptor 95 by using the functionalized identification information Sfid. Then, the substitute information decryptor 82 generates the key information Sk to output it to the data decoder 80.

Alternatively, when the encrypted key information Skss is decrypted, the decryption may be performed by using the functionalized identification information obtained through the functionization of the identification information Sidp by the functionalizer 97.

Next, if the substitute information generator 75 is constituted according to the third variation shown in Fig. 10C, first, the substitute information decryptor 82 separates the substitute information Scg' into the higher three bits and the lower three bits, and generates encrypted identification information Sdid and encrypted key information Sks.

Thereafter, the substitute information decryptor 82 processes the encrypted identification information Sdid, by using a decrypting method which corresponds to the encrypting method performed in the encryptor 98 by using the identification information Sid recorded in the innermost radius region of the DVD 100. Then, the substitute information decryptor 82 generates the identification information Sidp to output it to the identification information comparator 69.

Further, the substitute information decryptor 82 processes the encrypted key information Sks by means of a decrypting method corresponding to the encrypting method performed in the encryptor 95 which uses the identification information Sid mentioned above. Then, the substitute information decryptor 82 generates the key information Sk to output it to the data decoder 80.

Alternatively, when the encrypted key information Sks is decrypted, the decryption may be performed by using the identification information Sidp.

On the other hand, if the substitute information generator 75 is constituted according to the fourth variation shown in Fig. 10D, then the substitute information decryptor 82 is provided with the functionalizer 97 described above.

In this case, first, the substitute information decryptor 82 separates the substitute information Scg' into the higher three bits and the lower three bits, and generates encrypted identification information Sdid and encrypted key information Skss respectively.

Thereafter, the substitute information decryptor 82 processes the encrypted identification information Sdid, by using a decrypting method which corresponds to the encrypting method performed in the encryptor 98 by using the identification information Sid recorded in the innermost radius region of the DVD 100. Then, the substitute information decryptor 82 generates the identification information Sidp to output it to the identification information comparator 69.

Thereafter, the functionalizer 97 processes the identification information Sid, and generates functionalized identification information Sfid.

The substitute information decryptor 82 processes the encrypted key information Skss by means of a decrypting method corresponding to the encrypting method performed in the encryptor 95 which uses the functionalized identification information Sfid mentioned above. Then, the substitute information decryptor 82 generates the key information Sk to output it to the data decoder 80.

Alternatively, when the encrypted key information Skss is decrypted, the decryption may be performed by using the functionalized identification information obtained through the functionization of the identification information Sidp by the functionalizer 97.

Finally, if the substitute information generator 75 is constituted according to the fifth variation shown in Fig. 10E, first, the substitute information decryptor 82 separates the substitute information Scg' into the higher three bits and the lower three bits, and generates encrypted identification information Sfid and encrypted key information Sks.

In the above, the functionalized identification information Sfid is encrypted by means of a unidirectional encrypting function as described above. Therefore, it is no longer possible to restore the original identification information Sid from this functionalized identification information Sfid.

The substitute information decryptor 82 processes the other of the separated information, i.e. the encrypted key information Sks by means of a decrypting method corresponding to the encrypting method performed in the encryptor 95 which uses the identification information Sid recorded in the innermost radius region of the DVD 100. Then, the substitute information decryptor 82 generates the key information Sk to output it to the data decoder 80.

It should be noted here that if the key information Sk included as it is in the substitute information Scg' without encryption as described above, then the key information Sk separated from the substitute information Scg' should simply be outputted as it is to the data decoder 80.

Next, the identification information comparator 69 generates a permission signal Sco, which allows outputting of the output signal Sout from the data decoder 80, and outputs to the data decoder 80, only if the identification information Sid outputted from the RF amplifier 62 is identical with the identification information Sidp generated in one of the formats described in the above variations (i.e. only if the identification information Sid inserted in the record data signal Sr is found identical with the identification information Sid recorded in the innermost radius region for example of the DVD 100).

In the above, if the substitute information generator 75 is constituted according to the fifth variation shown in Fig. 10E, as has been described above, it is no longer possible to restore the original identification information Sid from the separated functionalized identification information Sfid. Thus, the identification information detected from the innermost radius region of the DVD 100 is encrypted by means of the same encrypting function as used in the generation of the functionalized identification information Sfid, and then the result of the encryption is compared with the above mentioned functionalized identification information Sfid. If the two pieces of information agree with each other, then the permission signal Sco which permits the output of the output signal Sout from the data decoder 80 is outputted.

The error correction circuit 65 performs an error correction process by using the ECC inner codes 31 and the ECC outer codes 32 to the ECC blocks 30' contained in the inputted reproduction signal Sdc (i.e. the ECC blocks 30' after the extraction of the substitute information Scg), generates an error-corrected signal Scr and outputs the generated signal to the data decoder 80.

Then, the data decoder 80 decrypts the error-corrected signal Scr by using the key information Sk generated by any one of the variations described above and by means of a decrypting process corresponding to the encrypting process used in the encryptor 76 in the cutting unit C2 or the information recording apparatus R2, only if the permission signal Sco permits the output of the output signal Sout. Then, the data decoder 80 outputs the signal Sout to the external display, speaker and so on.

In parallel to these processes, the system controller 70 generates the control signals Scpp, Spu and Scsp, and controls the operation of the above described components, and at the same time, performs an overall control process of the information reproducing apparatus S1.

A note should be made here that the data decoder 80, like the output controller 66 in the first embodiment, may alternatively be placed before the error correction circuit 65 instead of after the error correction circuit 65 as shown in Fig. 12, so that the output control of the output signal Sout can be made at this stage in accordance with the permission signal Sco.

As has been described above, according to the operation of the illegal copying prevention system provided by the second embodiment, additional advantage to the effects achieved by the first embodiment is obtained. Specifically, since the generation of the substitute information Scg' involves a variety of kinds of encrypting processes or functionalizing processes (See Fig. 10.), and the information Scg' is decrypted correspondingly at the time of information reproduction, it becomes possible to make more difficult to illegally obtain the key information Sk and the identification information Sidp, and therefore to prevent illegal duplication of the record more effectively.

It should be noted here that according to the second embodiment, description has been made only for a case in which the substitute information Scg' is constituted by an encrypted form of the key information Sk, i.e. the encrypted key information Sks and an encrypted form of the identification information Sid, i.e. the encrypted identification information Sdid. Alternatively however, the substitute information may be generated by using only the encrypted key information Sks.

In this particular case, since the substitute information is recorded in the DVD 100 that corresponds to the identification information Sid used in the generation of the encrypted key information Sks, the encrypted key information Sks is recorded in the DVD 100 in a form unique to each DVD. Therefore, such an arrangement may be made that decryption of the encrypted key information Sk is performed by using the identification information Sid, and encryption of the error-corrected signal Scr is made by using this key information Sk as the result of the encryption. With this arrangement, it becomes impossible to perform the decryption unless the identification information Sid is properly co-related with the encrypted key information Sk, and therefore it becomes possible to prevent an illegal copy (in which the identification information Sid is not properly co-related with the encrypted key information) of the record data signal Sr from being reproduced.

It should be noted further, that according to each of the embodiments described above, each of the DVDs 100 has an identification information Sid unique to itself. However, alternatively, especially in the mass production of the reproduction-only DVDs 100 by using the stamper disc SP, generally the same effect as achieved in each of the above described embodiments can be obtained by providing such an arrangement as that all the DVDs containing the same record data Sd have the same identification information Sid recorded therein.

Further, for these DVDs 100 as the above in which the same record data Sr is recorded, another arrangement may be made in which the same identification information Sid is used only for those DVDs allocated with the same lot number.

Another note should be made here that according to each of the embodiments described above, description has been made only for a case in which the identification information Sid corresponding to the DVD 100 itself is recorded at an innermost radius region which is not a reserved data recording region of the DVD 100. However, alternatively, the identification information Sid itself may be recorded at a position within the data recording region reserved separately from the positions containing the substitute information Scg or Scg'.

In this case, the cutting process and the information recording process can be simplified because the recording of the identification information Sid can be performed in parallel with the recording of the record data signal Sr.

Another note should be made for the position on the DVD 100 in which the substitute information Scg or Scg' is inserted according to each of the embodiments described. Alternatively to the data recording region as described above, the position may be anywhere including the read-in area and so on, as long as the position is in a recordable region.

However, in this particular case, the position should preferably be in the lead-in area or in a region within the data recording region allocated for recording of management information, in view of a possibility that reproducing operation of the record information can be cancelled.

It should also be noted here that a program corresponding to the recording process or the reproducing process according to each of the embodiments described above can be pre-recorded in a flexible disc, hard disc or other information recording medium. By reading and executing the program by a personal computer for example, the recording process or the reproducing process can become executable by an information recording/reproducing system constituted by the personal computer for example.

Another note should be made that each of the embodiments described above is an application of the present invention to a recordable DVD for example. However, the present invention can also be applied to other information recording media such as a recordable CD, whereby making possible to prevent an illegal copy of the record information.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

**Claims**

1. An information recording apparatus (C1, C2, R1, R2) **characterized in that** the information recording apparatus (C1, C2, R1, R2) comprises:

   a substitute information generating device (17) for generating substitute information (Scg) by using identification information (Sid) unique to each of information recording media (SP, 100) in which recording information (Sd) is to be recorded;
   a substituting device (3) for generating substituted recording information (Sdr) by substituting the generated substitute information (Scg) for part of the recording information (Sd); and
   a recording device (6, 50) for recording the generated substituted recording information (Sdr) in the information recording medium (SP, 100) corresponding to the identification information (Sid) used for the generation of the substitute information (Scg).

2. The information recording apparatus (C1, C2, R1, R2) according to Claim 1, **characterized in that** the information recording apparatus (C1, C2, R1, R2) further comprises a generating device (76) for encrypting the recording information (Sd) by using predetermined key information (Sk) to generate encrypted recording information (Sad), wherein the substituting device (3) generates the substituted recording information (Sdr) by substituting the generated substitute information (Scg') for part of the generated encrypted recording information (Sad), and the recording device (6, 50) records the key information (Sk), together with the generated substituted recording information (Sdr), in the information recording medium (SP, 100) corresponding to the identification information (Sid) used for the generation of the substitute information (Scg').

3. The information recording apparatus according (C1, C2, R1, R2) to Claim 2, **characterized in that** the substitute information generating device (17) generates the substitute information (Scg') including the key information (Sk).

4. The information recording apparatus (C1, C2, R1, R2) according to Claim 2 or 3, **characterized in that** the information recording apparatus (C1, C2, R1, R2) further comprises a key information encrypting device (75, 95) for encrypting the key information (Sk) by using the identification information (Sid) to generate encrypted key information (Sks), wherein the recording device (6, 50) records the generated encrypted key information (Sks) in place of the key information (Sk), in the information recording medium (SP, 100).

5. The information recording apparatus according (C1, C2, R1, R2) to Claim 4, **characterized in that** the information recording apparatus (C1, C2, R1, R2) further comprises an identification information encrypting device (75, 97, 98) for encrypting the identification information (Sid) by performing a predetermined encrypting process to generate encrypted identification information (Sfid, Sdid), wherein the key information encrypting device (75, 95) encrypts key information (Sk) by using the generated encrypted identification information (Sfid, Sdid) to generate the encrypted key information (Skss, Sks).

6. The information recording apparatus (C1, C2, R1, R2) according to any one of Claims 1 to 5, **characterized in that** the substitute information generating device (17) generates the substitute information (Scg') by using encrypted identification information (Sdid) obtained through a predetermined encrypting process performed to the identification information (Sid).

7. The information recording apparatus (C1, C2, R1, R2) according to Claim 5 or 6, **characterized in that** the encrypting process is a process to encrypt the identification information (Sid) by using a predetermined unidirectional encrypting function.

8. The information recording apparatus (C1, C2, R1, R2) according to any one of Claims 1 to 7, **characterized in that** the information recording apparatus (C1, C2, R1, R2) further comprises an adding device (2) for adding a correction code (31, 32) for error correction to the recording information (Sd) to generate added recording information (Sde), wherein the substituting device (3) substitutes the generated substitute information (Scg) for part of the added record information (Sde) to generate the substituted recording information (Sdr).

9. The information recording apparatus (C1, C2, R1, R2) according to any one of Claims 1 to 8, **characterized in that** the recording device (6, 50) records the identification information (Sid) used for the generation of the substitute information (Scg), together with the generated substituted recording information (Sdr), in the information recording medium (SP, 100) corresponding to the identification information (Sid).

10. The information recording apparatus (C1, C2, R1, R2) according to any one of Claims 1 to 8, **characterized in that** the identification information (Sid) is recorded in advance on the corresponding information recording medium (SP, 100), and the substitute information generating device (17) detects the recorded identification information (Sid) to use it for the generation of the substitute information (Scg).

11. The information recording apparatus (C1, C2, R1, R2) according to any one of Claims 1 to 10, **characterized in that** the substituting device (3) varies a mode of the substitution using the substitute information (Scg) by using the identification information (Sid).

12. An information recording apparatus (C1, C2, R1, R2) **characterized in that** the information recording apparatus (C1, C2, R1, R2) comprises:

a generating device (76) for encrypting recording information (Sd) to be recorded in an information recording medium (SP, 100) by using a predetermined key information (Sk) to generate encrypted recording information (Sad);
an encrypted key information generating device (75, 95) for encrypting the key information (Sk) by using identification information (Sid, Sfid) recorded in the information recording medium (SP, 100) as being unique to each of the information recording media (SP, 100) to generate encrypted key information (Sks, Skss); and
a recording device (6, 50) for recording the generated encrypted recording information (Sad) and the generated encrypted key information (Sks, Skss), in the information recording medium (SP, 100) corresponding to the identification information (Sid, Sfid) used for the generation of the encrypted key information (Sks, Skss).

13. The information recording apparatus (C1, C2, R1, R2) according to Claim 12, **characterized in that** the information recording apparatus (C1, C2, R1, R2) further comprises a substituting device (3) for substituting the generated encrypted key information (Sks, Skss) for part of the generated encrypted record information (Sad) to generate substituted recording information (Sdr), wherein the recording device (6, 50) records the generated substituted recording information (Sdr) in the information recording medium (SP, 100) corresponding to the identification information (Sid, Sfid) used for the generation of the encrypted key information (Sks, Skss).

14. An information recording medium (SP, 100) **characterized in that** the information recording medium (SP, 100) comprises:

an information recording region for recording substituted recording information (Sdr) obtained by substituting substitute information (Scg) for part of recording information (Sd), the substitute information (Scg) generated by using identification information (Sid) unique to each of the information recording media (SP, 100) in which the recording information (Sd) is to be recorded; and
an identification information recording region in which the identification information (Sid) corresponding to the information recording medium (SP, 100) is recorded.

15. The information recording medium (SP, 100) according to Claim 14, **characterized in that** information recorded in the information recording region is the substituted recording information (Sdr) obtained by substituting the generated substitute information (Scg') for part of the encrypted recording information (Sad) obtained through the encryption of the recording information (Sd) by using the predetermined key information (Sk).

16. An information recording medium (SP, 100) **characterized in that** the information recording medium (SP, 100) comprises:

(i) an information recording region for recording

encrypted recording information (Sad) obtained through encryption of recording information (Sd) to be recorded in the information recording medium (SP, 100) by using a predetermined key information (Sk) and
encrypted key information (Sks, Skss) obtained through encryption of the key information (Sk) by using identification information (Sid, Sfid) unique to each of the information recording media (SP, 100); and

(ii) an identification information recording region in which the identification information (Sid, Sfid) corresponding to the information recording medium (SP, 100) is recorded.

17. An information reproducing apparatus (S1, S2) for reproducing information from an information recording medium (100) in which substituted recording information (Sdr) obtained by substituting substitute information (Scg) generated by using identification information (Sid) unique to each of the information recording media (100) for part of recording information (Sd) and the identification information (Sid) corresponding to the information recording medium (100) are recorded; the information reproducing apparatus (S1, S2) **characterized in that** the information reproducing apparatus (S1, S2) comprises:

a detecting device (60) for detecting the substituted recording information (Sdc) from the information recording medium (100);
an identification information detecting device (60) for detecting the identification information (Sid) from the information recording medium (100);
a substitute information extracting device (64) for extracting the substitute information (Scg, Scg') from the detected substituted recording information (Sdc);
an identification information extracting device (82) for extracting the identification information (Sidp) from the extracted substitute information (Scg, Scg');
a comparing device (69) for comparing the identification information (Sidp) extracted from the substitute information (Scg) with the identification information (Sid) detected from the information recording medium (100); and
a reproducing device (80) for reproducing the recording information (Scr) obtained from the detected substituted recording information (Sdc) only if the identification information (Sidp) extracted from the substitute information (Scg, Scg') matches the identification information (Sid) detected from the information recording medium (100).

18. The information reproducing apparatus (S1, S2) according to Claim 17, **characterized in that**:

the substituted recording information (Sdc) is obtained by substituting the generated substitute information (Scg, Scg') for part of encrypted recording information (Sad) obtained through encryption of the recording information (Sd) by using a predetermined key information (Sk);
the key information (Sk) and the obtained substituted recording information (Sdc) are recorded in the information recording medium (100) corresponding to the identification information (Sid) used for the generation of the substitute information (Scg, Scg');
the information reproducing apparatus further comprises a key information detecting device (82) for detecting the key information (Sk) from the information recording medium (100); and

the reproducing device (80) decrypts the encrypted recording information (Sad) obtained from the detected substituted recording information (Sdc) by using the detected key information (Sk) and reproduces the recording information (Sd) only if the identification information (Sidp) extracted from the substitute information (Scg, Scg') matches the identification information (Sid) detected from the information recording medium (100).

19. The information reproducing apparatus (S1, S2) according to Claim 18, **characterized in that** the key information (Sk) is contained in the substitute information (Scg) and recorded in the information recording medium (100), and the key information detecting device (82) detects the key information (Sk) from the extracted substitute information (Scg, Scg').

20. The information reproducing apparatus (S1, S2) according to Claim 18 or 19, **characterized in that**:

encrypted key information (Sks, Skss) obtained through encryption of the key information (Sk) by using the identification information (Sid, Sfid) is recorded in the information recording medium (100) in place of the key information (Sk);
the key information detecting device (82) detects the encrypted key information (Sks, Skss) from the information recording medium (100);
the information reproducing apparatus (S1, S2) further comprises key information generating device (82) for generating the key information (Sk) through decryption of the detected encrypted key information (Sks, Skss) by using the detected identification information (Sid, Sfid); and
the reproducing device (80) decrypts the encrypted recording information (Sad) obtained from the detected substituted information (Scg, Scg') by using the generated key information (Sk) and reproduces the record information (Sd) only if the identification information (Sidp) extracted from the substitute information (Scg, Scg') matches the identification information (Sid, Sid') detected from the information recording medium (100).

21. The information reproducing apparatus (S1, S2) according to Claim 20, **characterized in that**:

the encrypted key information (Sks, Skss) is obtained through the encryption of the key information (Sk) by using encrypted identification information (Sdid, Sfid) obtained from a predetermined encrypting process performed to the identification information (Sid) and is recorded in the information recording medium (100); and the key information generating device (82) decrypts the detected encrypted key information (Sks, Skss) by using the encrypted identification information (Sad) obtained from the encrypting process performed to the detected identification information (Sid, Sfid) .

22. The information reproducing apparatus (S1, S2) according to Claim 21, **characterized in that** the encrypting process encrypts information by using a predetermined unidirectional encrypting function.

23. The information reproducing apparatus (S1, S2) according to any one of Claims 17 to 22, **characterized in that**:

the substitute information (Scg, Scg') is generated by using the encrypted identification information (Sdid, Sfid) obtained by the predetermined encrypting process performed to the identification information (Sid) corresponding to the information recording medium (100) in which the substituted recording information (Sdc) is to be recorded; the information reproducing apparatus (S1, S2) further comprises an identification information generating device (82) for extracting the encrypted identification information (Sdid, Sfid) from the extracted substitute information (Scg, Scg'), decrypting the encrypted identification information (Sad) by a decrypting process corresponding to the encrypting process, and generating the identification information (Sidp); and the reproducing device (80) reproduces the recording information (Sd) only if the generated identification information (Sidp) matches the identification information (Sid) detected from the information recording medium (100).

24. The information reproducing apparatus (S1, S2) according to any one of Claims 17 to 22, **characterized in that**:

the substitute information (Scg, Scg') is generated by using encrypted identification information (Sdid, Sfid) obtained through a predetermined encrypting process using a predetermined unidirectional encrypting function performed to the identification information corresponding to the information recording medium (100) in which the substituted recording information (Sdc) is to be recorded; the information reproducing apparatus (S1, S2) further comprises an encrypted identification information extracting device (82) for extracting the encrypted identification information (Sad) from the extracted substitute information (Scg, Scg'), and an encrypted identification information generating device (82) for generating second encrypted identification information through the encrypting process by using the encrypting function performed to the detected identification information (Sid); and the reproducing device (80) reproduces the recording information (Sd) only if the generated second encrypted identification information matches the extracted encrypted identification information (Sid).

25. The information reproducing apparatus (S1, S2) according to any one of Claims 17 to 24, **characterized in that**:

the substituted recording information (Sdc) is generated by substituting the generated substitute information (Scg, Scg') for part of added recording information (Sde) generated by adding a correction code (31, 32) for error correction to the recording information (Sd) and is recorded in the information recording medium (100); the substitute information extracting device (64) extracts the substitute information (Scg, Scg') from the substituted recording information (Sdc) before the error correction is executed; and the information reproducing apparatus (S1, S2) further comprises a correcting device (65) for performing an error correction process to the detected substituted recording information (Sdc) by using the correction code (31, 32).

26. The information reproducing apparatus (S1, S2) according to any one of Claims 17 to 25, **characterized in that**:

a mode of the substitution using the identification information (Sid, Sfid) in the substituted recording information (Sdc) is varied by using the substitute information (Scg, Scg'); and the substitute information extracting device (64) extracts the substitute information (Scg, Scg') from the detected substituted recording information (Sdc) based on the mode of the substitution specified by using the detected identification information (Sid).

27. An information reproducing apparatus (S1, S2) for reproducing information from an information recording medium (100) in which identification information (Sid, Sfid) unique to each of the information recording media (100), encrypted recording information (Sad) obtained through encryption of recording information (Sd) to be recorded therein by using a predetermined key information (Sk), and encrypted key information (Sks, Skss) obtained through encryption of the key information (Sk) by using the identification information (Sid, Sfid) are recorded; the information reproducing apparatus (S1, S2) **characterized in that** the information reproducing apparatus (S1, S2) comprises:

a detecting device (64) for detecting the encrypted recording information (Sad) and encrypted key information (Sks, Skss) from the information recording medium (100);

an identification information detecting device (82) for detecting the identification information (Sd) from the information recording medium (100);

a key information generating device (82) for decrypting the detected encrypted key information (Sks, Skss) by using the detected identification information (Sid, Sfid) to generate the key information (Sk); and

a reproducing device (80) for decrypting the detected encrypted recording information (Sad) by using the generated key information (Sk) to reproduce the recording information (Sd).

28. The information reproducing apparatus (S1, S2) according to Claim 27, **characterized in that**:

substituted recording information (Sdc) generated by substituting the generated encrypted key information (Sks, Skss) for part of the generated encrypted record information (Sad) is recorded in the information recording medium (100);

the detecting device (64) detects the substituted recording information (Sdc) from the information recording medium (100); and

the information reproducing apparatus (S1, S2) further comprises a key information extracting device (64) for extracting the encrypted key information (Sks, Skss) from the detected substituted recording information (Sdc).

29. An information recording method **characterized in that** the information recording method comprises:

a substitute information generating process of generating substitute information (Scg, Scg') by using identification information (Sid, Sfid) unique to each of information recording media (SP, 100) in which recording information (Sd) is to be recorded;

a substituting process of generating substituted recording information (Sd) by substituting the generated substitute information (Scg, Scg') for part of the recording information (Sd); and

a recording process of recording the generated substituted recording information (Sdr) in the information recording medium (SP, 100) corresponding to the identification information (Sid, Sfid) used for the generation of the substitute information (Scg, Scg').

30. The information recording method according to Claim 29, **characterized in that** the information recording method further comprises a generating process of encrypting the recording information (Sd) by using a predetermined key information (Sk) to generate encrypted recording information (Sad), wherein the substituting process generates the substituted recording information (Sdr) by substituting the generated substitute information (Scg, Scg') for part of the generated encrypted recording information (Sad), and the recording process records the key information (Sk), together with the generated substituted recording information (Sdr), in the information recording medium (100) corresponding to the identification information (Sid, Sfid) used for the generation of the substitute information (Scg, Scg').

31. An information recording method **characterized in that** the information recording method comprises:

a generating process of encrypting recording information (Sd) to be recorded in an information recording medium (SP, 100) by using a predetermined key information (Sk) to generate encrypted recording information (Sad);

an encrypted key information generating process of encrypting the key information (Sk) by using identification information (Sid) recorded on the information recording medium (SP, 100) as being unique to each of the information recording media (SP, 100) to generate encrypted key information (Sks, Skss); and

a recording process of recording the generated encrypted recording information (Sad) and the generated encrypted key information (Sks, Skss), in the information recording medium (100) corresponding to the identification information (Sid, Sfid) used for the generation of the encrypted key information (Sks., Skss).

32. An information reproducing method for reproducing information from an information recording medium (100) in which substituted recording information (Sdc) obtained by substituting substitute information (Scg, Scg') generated by using identification information (Sid, Sfid) unique to each of the information recording media (100) for part of recording information (Sd) and the identification information (Sid, Sfid) corresponding to the information recording medium (100) are recorded; **characterized in that** the information recording method comprises:

a detecting process of detecting the substituted recording information (Sdc) from the information recording medium (100);

an identification information detecting process of detecting the identification information (Sid, Sfid) from the information recording medium (100);

a substitute information extracting process of extracting the substitute information (Sid, Sfid) from the detected substituted recording information (Sdc);

an identification information extracting process of extracting the identification information (Sid, Sfid) from the extracted substitute information (Scg, Scg');

a comparing process of comparing the identification information (Sid, Sfid) extracted from the substitute information (Scg, Scg') with the identification information (Sid, Sfid) detected from the information recording medium (100); and

a reproducing process of reproducing the recording information (Sd) obtained from the detected substituted recording information (Sdc) only if the identification information (Sid, Sfid) extracted from the substitute information (Scg, Scg') matches the identification information (Sid, Sfid) detected from the information recording medium (100).

33. The information reproducing method according to Claim 32, **characterized in that**:

the substituted recording information (Sdc) is obtained by substituting the generated substitute information (Scg, Scg') for part of encrypted recording information (Sad) obtained through encryption of the recording information (Sd) by using a predetermined key information (Sk);

the key information (Sk) and the obtained substituted recording information (Sdc) are recorded in the information recording medium (100) corresponding to the identification information (Sid, Sfid) used for the generation of the substitute information (Scg, Scg');

the information reproducing method further comprises a key information detecting process of detecting the key information (Sk) from the information recording medium (100); and

the reproducing process decrypts the encrypted recording information (Sad) obtained from the detected substituted recording information (Sdc) by using the detected key information (Sk) and reproduces the recording information (Sd) only if the identification information (Sidp) extracted from the substitute information (Scg, Scg') matches the identification information (Sid) detected from the information recording medium (Sid).

34. An information reproducing method for reproducing information from an information recording medium in which identification information (Sid, Sfid) unique to each of the information recording media (100), encrypted recording information (Sad) obtained through encryption of recording information (Sd) to be recorded therein by using a predetermined key information (Sk), and encrypted key information (Sks, Skss) obtained through encryption of the key information (Sk) by using the identification information (Sid, Sfid) are recorded; the information reproducing method **characterized in that** the information recording method comprises:

a detecting process of detecting the encrypted recording information (Sad) and encrypted key information (Sks, Skss) from the information recording medium (100);

an identification information detecting process of detecting the identification information (Sid, Sfid) from the information recording medium (100);

a key information generating process of decrypting the detected encrypted key information (Sks, Skss) by using the detected identification information (Sid, Sfid) to generate the key information (Sk); and

a reproducing process of decrypting the detected encrypted recording information (Sad) by using the generated key information (Sk) to reproduce the recording information (Sd).

35. A program information recording medium in which an information recording control program is readably recorded by a computer included in an information recording apparatus (C1, C2, R1, R2) for recording information in an information recording medium (SP, 100), the information recording control program causing the computer to function as information recording control devices, **characterized in that** the information recording control devices comprises:

a substitute information generating device (17) for generating substitute information (Scg, Scg') by using identification information (Sid, Sfid) unique to each of information recording media (100) in which recording information (Sd) is to be recorded;

a substituting device for generating substituted recording information (Sdr) by substituting the generated substitute information (Scg, Scg') for part of the recording information (Sd); and

a recording device for recording the generated substituted recording information (Sdr) in the information recording medium (SP, 100) corresponding to the identification information (Sid, Sfid) used for the generation of the substitute information (Scg, Scg').

36. The program information recording medium according to Claim 35, wherein the information recording control program causes the computer to function as information recording control devices, **characterized in that** the information recording control devices further comprises a generating device (76) for encrypting the recording information (Sd) by using predetermined key information (Sk) to generate encrypted recording information (Sad),

the substituting device generates the substituted recording information (Sdr) by substituting the generated substitute information (Scg, Scg') for part of the generated encrypted recording information (Sad), and
the recording device records the key information (Sk), together with the generated substituted recording information (Sdr), in the information recording medium (SP, 100) corresponding to the identification information (Sid, Sfid) used for the generation of the substitute information (Scg, Scg').

37. A program information recording medium in which an information recording control program is readably recorded by a computer included in an information recording apparatus (C1, C2, R1, R2) for recording information in an information recording medium (SP, 100), the information recording control program causing the computer to function as information recording control devices, **characterized in that** the information recording control devices comprises:

a generating device (76) for encrypting recording information (Sd) to be recorded in an information recording medium (SP, 100) by using a predetermined key information (Sk) to generate encrypted recording information (Sad);
an encrypted key information generating device (75) for encrypting the key information (Sk) by using identification information (Sid, Sfid) recorded in the information recording medium (SP, 100) as being unique to each of the information recording media (SP, 100) to generate encrypted key information (Sks, Skss); and
a recording device for recording the generated encrypted recording information (Sad) and the generated encrypted key information (Sks, Skss), in the information recording medium (SP, 100) corresponding to the identification information (Sid, Sfid) used for the generation of the encrypted key information (Sks, Skss).

38. A program information recording medium in which an information reproducing control program is readably recorded by a computer included in an information reproducing apparatus (S1, S2) for reproducing information from an information recording medium (100) in which substituted recording information (Sdc) obtained by substituting substitute information (Scg, Scg') generated by using identification information (Sid, Sfid) unique to each of the information recording media (100) for part of recording information (Sd) and the identification information (Sid, Sfid) corresponding to the information recording medium (100) are recorded, the information reproducing control program causing the computer to function as information reproducing control devices, **characterized in that** the information reproducing control devices comprises:

a detecting device (60) for detecting the substituted recording information (Sdc) from the information recording medium (100);
an identification information detecting device (60) for detecting the identification information (Sid, Sfid) from the information recording medium (100);
a substitute information extracting device (64) for extracting the substitute information (Scg, Scg') from the detected substituted recording information (Sdc);
an identification information extracting device for extracting the identification information (Sid, Sfid) from the extracted substitute information (Scg, Scg');
a comparing device for comparing the identification information (Sidp) extracted from the substitute information (Scg, Scg') with the identification information (Sid) detected from the information recording medium (100); and
a reproducing device for reproducing the recording information (Sd) obtained from the detected substituted recording information (Sdc) only if the identification information (Sidp) extracted from the substitute information (Scg, Scg') matches the identification information (sid) detected from the information recording medium (100).

39. The program information recording medium according to Claim 38, **characterized in that**:

the substituted recording information (Sdc) is obtained by substituting the generated substitute information (Scg, Scg') for part of encrypted recording information (Sad) obtained through encryption of the recording information (Sd) by using a predetermined key information (Sk);
the key information and the obtained substituted recording information (Sdc) are recorded in the information recording medium (100) corresponding to the identification information (Sid, Sfid) used for the generation of the substitute information (Scg, Scg');

the information reproducing control program causes the computer to function as information reproducing control devices, the information reproducing control devices further comprising a key information detecting device (82) for detecting the key information (Sk) from the information recording medium (100); and

the reproducing device (80) decrypts the encrypted recording information (Sad) obtained from the detected substituted recording information (Sdc) by using the detected key information (Sk) and reproduces the recording information (Sd) only if the identification information (Sidp) extracted from the substitute information (Scg, Scg') matches the identification information (Sid) detected from the information recording medium (100).

40. An information recording medium in which an information reproducing control program is readably recorded by a computer included in an information reproducing apparatus (S1, S2) for reproducing information from an information recording medium (100) in which substituted recording information (Sdc) obtained by substituting substitute information (Scg, Scg') generated by using identification information (Sid, Sfid) unique to each of the information recording media (100) for part of recording information (Sd) and the identification information (Sid, Sfid) corresponding to the information recording medium (100) are recorded, the information reproducing control program causing the computer to function as information reproducing control devices, **characterized in that** the information reproducing control devices comprises:

a detecting device (60) for detecting the encrypted recording information (Sad) and encrypted key information (Sks, Skss) from the information recording medium (100);

an identification information detecting device (60) for detecting the identification information (Sid, Sfid) from the information recording medium (100);

a key information generating device (82) for decrypting the detected encrypted key information (Sks, Skss) by using the detected identification information (Sid, Sfid) to generate the key information (Sk); and

a reproducing device (80) for decrypting the detected encrypted recording information (Sad) by using the generated key information (Sk) to reproduce the recording information (Sd).

# FIG. 1

<u>C1</u>

2 — ECC ENCODER

3 — SUBSTITUTE INFORMATION WRITER

4 — ENCODER

5 : LASER GENERATOR

6 : LIGHT MODULATOR

B : LIGHT BEAM

7 : OBJECT LENS

SP : STAMPER DISC

14 : RESIST

15 : GLASS SUBSTRATE

13 : SPINDLE MOTOR

12 : FEEDING UNIT

Sde

Sd

1 — DATA GENERATOR

17 — SUBSTITUTE INFORMATION GENERATOR

Scg

Spo

Sdr

18 — SUBSTITUTE INFORMATION POSITION GENERATOR

Sr

Sid

16 — IDENTIFICATION INFORMATION GENERATOR

ROTATION SERVO CIRCUIT

8

ROTATION DETECTOR

9

FEEDING SERVO CIRCUIT

10

POSITION DETECTOR

11

EP 1 148 488 A2

34

# FIG. 2

```
         ┌─────────────┐
         │    START    │
         └─────────────┘
                │
                ▼
      ┌───────────────────┐
      │     ADD  IEC      │──── S1
      └───────────────────┘
                │
                ▼
      ┌───────────────────┐
      │     GENERATE      │──── S2
      │   DATA  SECTORS   │
      └───────────────────┘
                │
                ▼
      ┌───────────────────┐
      │     SCRAMBLE      │──── S3
      └───────────────────┘
                │
                ▼
      ┌───────────────────┐
      │     GENERATE      │──── S4
      │   ECC  BLOCKS     │
      └───────────────────┘
                │
                ▼
      ┌───────────────────┐
      │ WRITE  SUBSTITUTE │──── S5
      │   INFORMATION     │
      └───────────────────┘
                │
                ▼
      ┌───────────────────┐
      │    INTERLEAVE     │──── S6
      └───────────────────┘
                │
                ▼
      ┌───────────────────┐
      │      8-16         │──── S7
      │   MODULATION      │
      └───────────────────┘
                │
                ▼
      ┌───────────────────┐
      │     RECORD        │──── S8
      └───────────────────┘
                │
                ▼
         ┌─────────────┐
         │     END     │
         └─────────────┘
```

# FIG. 3A

DATA SECTOR (2064Byte)     20:DATA SECTOR

| 4Byte | 2Byte | 6Byte | 2048Byte | 4Byte |
|---|---|---|---|---|
| ID | IEC | RSV | DATA | EDC |
| 21 | 22 | 23 | 24 | 25 |

# FIG. 3B

30: ECC BLOCK

33:DATA BLOCK     31

21 22 23   20

| ID | IED | RSV | DATA |
|---|---|---|---|
| | DATA | | |
| | DATA | | |

12 LINES

| | DATA | | |
| | DATA | | EDC |

24   25

172Byte

31:ECC INNER CODE
32:ECC OUTER CODE
34:CORRECTION BLOCK

192 LINES (12×16)

P0 (16LINES)

| D0.0 | D0.1 | ··· | D0.170 | D0.171 | D0.172 | ··· | D0.181 | } 34 |
|---|---|---|---|---|---|---|---|---|
| D1.0 | D1.1 | ··· | D1.170 | D1.171 | D1.172 | ··· | D1.181 | } 34 |
| D2.0 | D2.1 | ··· | D2.170 | D2.171 | D2.172 | ··· | D2.181 | } 34 |
| D3.0 | D3.1 | ··· | D3.170 | D3.171 | D3.172 | ··· | D3.181 | } 34 |
| ⋮ | ⋮ | ⋮ | ⋮ | ⋮ | ⋮ | ⋮ | ⋮ | |
| D190.0 | D190.1 | ··· | D190.170 | D190.171 | D190.172 | ··· | D190.181 | } 34 |
| D191.0 | D191.1 | ··· | D191.170 | D191.171 | D191.172 | ··· | D191.181 | } 34 |
| D192.0 | D192.1 | ··· | D192.170 | D192.171 | D192.172 | ··· | D192.181 | } 34 |
| ⋮ | ⋮ | ⋮ | ⋮ | ⋮ | ⋮ | ⋮ | ⋮ | |
| D207.0 | D207.1 | ··· | D207.170 | D207.171 | D207.172 | ··· | D207.181 | } 34 |

172Byte     P1 (10Byte)

32

EP 1 148 488 A2

# FIG. 4

30': ECC BLOCK

33: DATA BLOCK 31

| | | | | | | | | | |
|---|---|---|---|---|---|---|---|---|---|
| D0.0 | D0.1 | ・・・ | D0.170 | D0.171 | D0.172 | D0.173 | ・・・ | D0.181 | } 34 |
| D1.0 | D1.1 | ・・・ | D1.170 | D1.171 | D1.172 | D1.173 | ・・・ | D1.181 | } 34 |
| D2.0 | D2.1 | ・・・ | D2.170 | D2.171 | D2.172 | D2.173 | ・・・ | D2.181 | } 34 |
| D3.0 | D3.1 | ・・・ | D3.170 | D3.171 | D3.172 | D3.173 | ・・・ | D3.181 | } 34 |
| ・ | ・ | ・ | ・ | ・ | ・ | ・ | ・ | ・ | |
| D190.0 | D190.1 | ・・・ | D190.170 | D190.171 | D190.172 | D190.173 | ・・・ | D190.181 | } 34 |
| D191.0 | D191.1 | ・・・ | <u>35</u> | D191.171 | D191.172 | D191.173 | ・・・ | D191.181 | } 34 |
| D192.0 | D192.1 | ・・・ | D192.170 | D192.171 | <u>35</u> | D192.173 | ・・・ | D192.181 | } 34 |
| ・ | ・ | ・ | ・ | ・ | ・ | ・ | ・ | ・ | |
| D207.0 | D207.1 | ・・・ | D207.170 | D207.171 | D207.172 | D207.173 | ・・・ | D207.181 | } 34 |

192 LINES (12×16)

P0 (16LINES)

172Byte  P1(10Byte)

32

31: ECC INNER CODE  34: CORRECTION BLOCK
32: ECC OUTER CODE  35: SUBSTITUTE INFORMATION

EP 1 148 488 A2

# FIG. 5

30': ECC BLOCK

34:CORRECTION BLOCK

34:CORRECTION BLOCK

| D0.0 | | D0.1 | D0.172 | | D0.181 | | D191.0 | | D191.171 | D191.172 | | D191.181 | D192.0 | | D207.181 |

33:DATA BLOCK (172BYTES)
31:ECC INNER CODE (10BYTES)
33:DATA BLOCK (172BYTES)
31:ECC INNER CODE (10BYTES)
32:ECC OUTER CODE (182×16BYTES)

INTERLEAVE
DEINTERLEAVE

40:RECORDING SECTOR

21    21    40    21    40

I D | 0 | | 12 | I D | RECORDING SECTOR | | I D | RECORDING SECTOR

182BYTES

(16 RECORDING SECTORS = 1 ECC BLOCK)

H  41   H  41

HEADER | DATA | HEADER | DATA

91BYTES    91BYTES

8-16 MODULATION
8-16 DEMODULATION

H'  43   H'  43   H'  43

HEADER | DATA | HEADER | DATA   HEADER | DATA ← DVD etc

42:SYNC FRAME    42    (26 SYNC FRAMES = 1 RECORDING SECTOR)    42

EP 1 148 488 A2

# FIG. 6

# FIG. 7

100:DVD

B: LIGHT BEAM

PICKUP — 60

61: SPINDLE MOTOR

40

Sp

62

Sspp

Sssp

RF AMPLIFIER

Srf

63

DECODER

Sdc

64

SUBSTITUTE INFORMATION EXTRACTOR

Sdc

65

ERROR CORRECTION CIRCUIT

Scr

66

OUTPUT CONTROLLER

Sout

67

SUBSTITUTE INFORMATION POSITION GENERATOR

Spo

68

IDENTIFICATION INFORMATION EXTRACTOR

Scg

Sidp

Sco

69

IDENTIFICATION INFORMATION COMPATATOR

Scpp

Spu

Sid

SERVO IC

70

SYSTEM CONTROLLER

Scsp

71

S1

EP 1 148 488 A2

# FIG. 8

# FIG. 9

C2

EP 1 148 488 A2

# FIG.10 A

95 — ENCRYPTOR

Sk (input)
Sid

Sks

96 — ADDER

75

Scg'

# FIG.10 C

95 — ENCRYPTOR

Sk (input)
Sid
75

Sks

96 — ADDER

Sdid

98 — ENCRYPTOR

Scg'

# FIG.10 B

95 — ENCRYPTOR

Sk
Sfid

97 — FUNCTIO-NALIZER

Sid

Sks

96 — ADDER

75

Scg'

# FIG.10 D

95 — ENCRYPTOR

Sk
Sfid

97 — FUNCTIO-NALIZER

Sid

Sks

96 — ADDER

ENCRYPTOR

Scg'
Sdid

75

98

# FIG.10 E

95 — ENCRYPTOR

Sk
Sid

Sks
Sfid

96 — ADDER

97 — FUNCTIO-NALIZER

Scg'

75

# FIG.11

# FIG.12

EP 1 148 488 A2